# EUROPEAN PATENT APPLICATION

(11) **EP 4 614 287 A1**
(43) Date of publication of application: **10.09.2025**
(21) Application number: 22964352.3
(22) Date of filing: 31.10.2022
(51) Int. Cl.: G06F 3/0338, A63F 13/22

(54) **OPERATION DEVICE, INFORMATION PROCESSING METHOD, AND COMPUTER PROGRAM**

(71) Applicant: Sony Interactive Entertainment Inc., Tokyo 108-0075 (JP)
(72) Inventor: KAWAI, Keisuke, Tokyo 108-0075 (JP); SATO, Kenichi, Tokyo 108-0075 (JP)
(74) Representative: D Young & Co LLP
(86) International application number: PCT/JP2022/040761
(87) International publication number: WO 2024/095329

(57) **Abstract**

A controller 6 includes a notifying apparatus that gives notification to the user, and a storage section that stores a plurality of pieces of setting information regarding the controller 6. In a case where a predetermined switching instruction is input, the controller 6 switches setting information to be applied to the controller 6. In a case where the switching of the setting information to be applied to the controller 6 is sensed, the controller 6 gives notification of the switching of the setting information by actuating the notifying apparatus in a predetermined pattern after a predetermined segmentation period has elapsed.

## Description

### [Technical Field]

The present invention relates to a data processing technology, and in particular relates to an operation apparatus, an information processing system, and a computer program.

### [Background Art]

In recent years, controllers which allow storage of a plurality of pieces of setting information regarding operation of the controllers and allow switching of the setting information by users are more widely used.

### [Summary]

### [Technical Problem]

There has been a possibility that it is difficult to make distinctions between notification to a user from an application being played with and notification to the user that accompanies switching of setting information, and this confuses the user.

An object of the present invention is to provide a technology to assist in enabling easy distinctions between notification from an application to a user and notification to the user that accompanies switching of setting information.

### [Solution to Problem]

In order to solve the problem described above, an operation apparatus according to an aspect of the present invention is an operation apparatus to which operation by a user who plays with an application is input and includes a notifying apparatus that gives notification to the user, a notification control section that actuates the notifying apparatus, a storage section that stores a plurality of pieces of setting information regarding behavior of the operation apparatus, and a switching section that switches setting information to be applied to the operation apparatus, in a case where a predetermined switching instruction is input. In a case where the switching of the setting information to be applied to the operation apparatus is sensed, the notification control section gives notification of the switching of the setting information by actuating the notifying apparatus in a predetermined pattern after a predetermined first segmentation period has elapsed.

Another aspect of the present invention is an operation apparatus. The apparatus is an operation apparatus to which operation by a user who plays with an application is input, and includes a processor, a notifying apparatus that is controlled by the processor and gives notification to the user, and a storage section that stores a plurality of pieces of setting information regarding behavior of the operation apparatus. The processor switches setting information to be applied to the operation apparatus, in a case where a predetermined switching instruction is input, and, in a case where the switching of the setting information to be applied to the operation apparatus is sensed, the processor gives notification of the switching of the setting information by actuating the notifying apparatus in a predetermined pattern after a predetermined first segmentation period has elapsed.

Still another aspect of the present invention is an information processing method. The method is executed by an operation apparatus to which operation by a user who plays with an application is input and which includes a notifying apparatus that gives notification to the user, and a storage section that stores a plurality of pieces of setting information regarding behavior of the operation apparatus, and the method includes a step of switching setting information to be applied to the operation apparatus, in a case where a predetermined switching instruction is input, and a step of giving notification of, in a case where the switching of the setting information to be applied to the operation apparatus is sensed, the switching of the setting information by actuating the notifying apparatus in a predetermined pattern after a predetermined first segmentation period has elapsed.

Note that any combinations of the constituent elements mentioned above and ones obtained by converting expressions of the present invention between a computer program, a recording medium having stored thereon a computer program, and the like also are valid as aspects of the present invention.

### [Advantageous Effect of Invention]

The present invention can assist in enabling easy distinctions between notification from an application to a user and notification to the user that accompanies switching of setting information.

### [Brief Description of Drawings]

[FIG. 1] FIG. 1 is a figure depicting an information processing system according to an embodiment.
[FIG. 2] FIG. 2 is a figure depicting the top side of a controller.
[FIG. 3] FIG. 3 is a figure depicting the rear side of the controller.
[FIG. 4] FIG. 4 is a figure depicting the hardware configuration of the controller.
[FIG. 5] FIG. 5 is a figure depicting the hardware configuration of an information processing apparatus.
[FIG. 6] FIG. 6 is a block diagram depicting functional blocks of the controller.
[FIG. 7] FIG. 7 is a block diagram depicting functional blocks of the information processing apparatus.
[FIG. 8] FIG. 8 is a figure depicting an example of interactions between the information processing apparatus and the controller.
[FIG. 9] FIG. 9 is a figure depicting a configuration example of an output report.
[FIG. 10] FIG. 10 is a figure depicting a configuration example of an output report.
[FIG. 11] FIG. 11 is a figure depicting an example of an analog stick settings screen.
[FIG. 12] FIG. 12 is a figure depicting a configuration example of an output report.
[FIG. 13] FIG. 13 is a figure depicting examples of sensitivity curves.
[FIG. 14] FIG. 14 is a figure depicting an example of a trigger settings screen.
[FIG. 15] FIG. 15 is a figure depicting a configuration example of an output report?
[FIG. 16] FIG. 16 is a figure for explaining a dead zone setting value.
[FIG. 17] FIG. 17 is a figure depicting an example of a trigger settings screen.
[FIG. 18] FIG. 18 is a flowchart depicting an operation performed by the controllerP
[FIG. 19] FIG. 19 is a figure depicting a configuration example of an input report.
[FIG. 20] FIG. 20 is a figure depicting a mode of notification of profile switching to which a third feature is not applied.
[FIG. 21] FIG. 21 is a figure depicting a mode of notification of profile switching to which the third feature is applied.

### [Description of Embodiment]

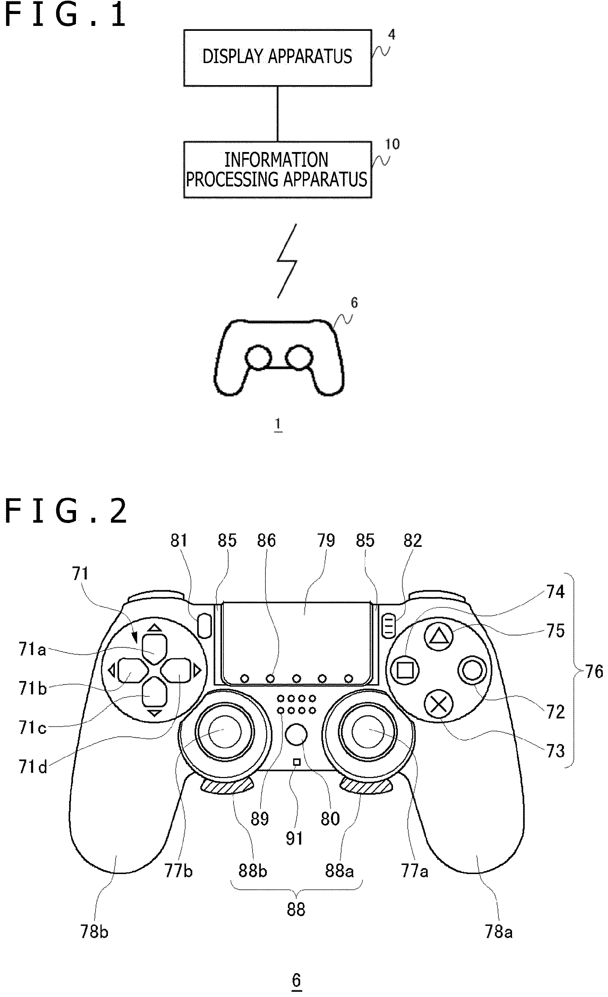

FIG. 1 depicts an information processing system 1 according to an embodiment. The information processing system 1 includes an information processing apparatus 10, a display apparatus 4, and a controller 6. The information processing apparatus 10 according to the embodiment is a stationary game console. As a modification example, the information processing apparatus 10 may be a computer, a tablet terminal, or a smartphone that can execute applications such as games.

The controller 6 is an operation apparatus that accepts operation input by a user regarding information processing (e.g., a video game) executed by the information processing apparatus 10. The controller 6 serially transmits, to the information processing apparatus 10, operation information representing the operation input from the user. The controller 6 can also be said to be a game controller. The information processing apparatus 10 and the controller 6 are connected through a wire or wirelessly. It is assumed that the information processing apparatus 10 according to the embodiment is equipment installed at the user's home or the like, but, as a modification example, functions of the information processing apparatus 10 in the embodiment may be implemented on a server that is installed in the cloud and provides cloud services (cloud games, etc.) via the Internet or the like. The controller 6 may communicate with the server via a terminal or communication equipment installed at the user's home or the like.

The display apparatus 4 may be a television having a display that outputs images and a speaker that outputs sounds or may be a computer display. The display apparatus 4 may be connected to the information processing apparatus 10 through a wire cable or wirelessly. Upon accepting operation information provided from the controller 6, the information processing apparatus 10 causes processes at system software or application software to reflect the operation information, and causes the display apparatus 4 to display images related to processing results.

A summary and features of the information processing system 1 according to the embodiment are explained.

The controller 6 according to the embodiment stores, on a non-volatile memory, setting information (hereinafter, also called "profile information" or "profiles" simply) related to operation of the controller 6 and customized by the user. Profile information includes setting information regarding the behavior of the controller 6. The controller 6 can store a plurality of pieces of profile information, and profile information to be applied can be switched in response to user operation.

Profile information may include setting values that are predetermined regarding operation on the controller 6, and the like. In addition, profile information may include setting information regarding generation of operation information input to the information processing apparatus 10 according to input operation on the controller 6. In addition, profile information may include information to be referred to when analog values sensed in response to input of operation to the controller 6 are converted into digital values. In addition, profile information may include setting information regarding the intensity of feedback (e.g., vibration, emission of light, sound, etc.) at the controller 6.

In addition, profile information may include setting information regarding changes of image generation modes of the information processing apparatus 10 or image display modes of the display apparatus 4 according to operation input to the controller 6. In addition, profile information may include setting information regarding changes of sound output modes of the information processing apparatus 10, headphones (not depicted), or the like according to operation input to the controller 6. In addition, profile information may include setting information regarding changes of chatting modes according to operation input to the controller 6.

In addition, profile information may include setting information related to a microphone. For example, the setting information related to a microphone may include ON/OFF information regarding a microphone noise cancellation function, ON/OFF information regarding a microphone mute function, microphone volume setting information, and the like.

Profile information according to the embodiment includes IDs (identifications) or names of profiles, button assignment information, sensitivity-related information regarding analog input devices, and corresponding button information. Button assignment information is information representing various types of actions, commands, and functions assigned to respective buttons of the controller 6 by the user. In other words, button assignment information is information representing the status of assignment of various types of actions, commands, and functions to respective buttons. Corresponding button information is identification information regarding buttons of the controller 6 with which profile information is associated, and, for example, is information representing a circle button 72 or a cross button 73 mentioned later.

Sensitivity-related information regarding analog input devices includes information representing sensitivity-related setting values of the analog input devices. The sensitivity of the analog input devices specifies the degrees of operation recognized by the information processing apparatus 10 depending on the degrees (e.g., the tilt amounts or rotation amounts) of operation actually input to the analog input devices by the user. The degrees of operation recognized by the information processing apparatus 10 can also be said to be the degrees of operation input to data processing at the information processing apparatus 10. Sensitivity setting values may be the ratios between the amounts of operation actually input to the analog input devices and the amounts of operation recognized by the information processing apparatus 10.

In addition, sensitivity-related information regarding analog input devices includes dead zone information regarding the analog input devices, and, for example, includes setting values related to dead zones. The dead zones can also be said to be insensitive zones, and are ranges where operation input to the analog input devices is not accepted. In other words, the dead zones are ranges where operation input to the analog input devices is ignored. The dead zone setting values may be value ranges of the tilt amounts or rotation amounts corresponding to the dead zones. In this manner, profile information according to the embodiment includes setting information regarding analog input devices of the controller 6. As mentioned later, the controller 6 according to the embodiment includes analog sticks and trigger buttons as analog input devices.

The present inventors have recognized a first problem that an operation interface that is easy for the user to understand intuitively is demanded as an operation interface in an adjustment mode for adjusting analog input devices of the controller.

As a first feature of the information processing system 1 for solving the first problem described above, in the adjustment mode, the controller 6 transmits, to the information processing apparatus 10, both a first value adjusted using setting information being adjusted and a second value to which the setting information being adjusted is not applied, as values related to user operation input to an analog input device. The information processing apparatus 10 causes a settings screen in the adjustment mode to display an image representing the relation between the first value and the second value.

In addition, the present inventors have recognized a second problem that there is a possibility that, in a case where the user switches profile information to be applied at the controller 6, key assignment different from the key assignment expected by an application being executed (also called an active application) at the controller 6 is applied undesirably.

As a second feature of the information processing system 1 for solving the second problem described above, operation modes of the controller 6 include a first mode in which profile information is switched in accordance with control by the information processing apparatus 10 and a second mode in which profile information is switched in response to predetermined input by the user. According to the execution status of an application, the information processing apparatus 10 instructs the controller 6 to switch profile information to be applied.

In addition, the present inventors have recognized a third problem that there is a possibility that, in a case where the user is notified of switching of profile information by vibration, light emission, and the like of the controller 6, it is difficult to make distinctions between notification from an application to the user and notification to the user that accompanies switching of profile information, and that this confuses the user.

As a third feature of the information processing system 1 for solving the third problem described above, in a case where profile information to be applied to the controller 6 is switched, the information processing apparatus 10 gives notification of the switching of profile information by actuating notifying apparatuses of the controller 6 in a predetermined pattern after a segmentation period during which the notifying apparatuses are not actuated has elapsed.

The button configuration of the controller 6 is explained. FIG. 2 depicts the top side of the controller 6. The user operates the controller 6 while gripping a left grip section 78b with her/his left hand and gripping a right grip section 78a with her/his right hand. The top side of the housing of the controller 6 is provided with directional buttons 71, a right analog stick 77a, a left analog stick 77b, and operation buttons 76, which are input sections. The directional buttons 71 are configured to be able to be operated in eight directions which are the upward direction, the downward direction, the leftward direction, the rightward direction, and the diagonal directions, and, in the present embodiment, include an up button 71a, a left button 71b, a down button 71c, and a right button 71d. Different figures are drawn in different colors on the four types of the operation buttons 76 in order to make distinctions thereamong. The operation buttons 76 include the circle button 72, the cross button 73, a square button 74, and a triangle button 75.

The right analog stick 77a and the left analog stick 77b are also called control sticks, thumb sticks, or joysticks, and are used to input directions and tilt amounts by being tilted. The tilt amounts can also be said to be angles by which the right analog stick 77a and the left analog stick 77b are inclined. The right analog stick 77a and the left analog stick 77b function also as press buttons that sink downward by being pressed by the user, and return to the original positions when the user moves his/her hand away from the right analog stick 77a and the left analog stick 77b. Hereinbelow, in a case where the right analog stick 77a and the left analog stick 77b are referred to collectively, they are also called "analog sticks 77." The operation buttons 76, the directional buttons 71, and the analog sticks 77 are used for operation of an application (e.g., a game) executed on the information processing apparatus 10.

A touch pad 79 is provided in a flat area between the directional buttons 71 and the operation buttons 76 on the top side of the housing. The touch pad 79 senses the touch of a finger of the user, and additionally functions also as a press button that sinks downward by being pressed by the user and returns to the original position when the user moves his/her hand away. In addition, a speaker 89 and a microphone 91 are further provided on the top side of the housing.

A home button 80 is provided between the right analog stick 77a and the left analog stick 77b. The home button 80 is used for turning on the power supply of the controller 6 or the information processing apparatus 10, and simultaneously for activating a communication function to establish wireless connection with the information processing apparatus 10. After the controller 6 is connected with the information processing apparatus 10, the home button 80 is used also for causing the information processing apparatus 10 to display a menu screen or a home screen. The menu screen or the home screen is a screen for allowing the user to select functions or applications to be executed by the information processing apparatus 10.

A CREATE button 81 is provided to the left of the touch pad 79. An OPTIONS button 82 is provided to the right of the touch pad 79. The CREATE button 81 and the OPTIONS button 82 are used for inputting instructions from the user to the OS (Operating System) or system software of the information processing apparatus 10. In other words, the CREATE button 81 and the OPTIONS button 82 are buttons to be used for calling (operating) functions of the OS or system software of the information processing apparatus 10. Both the CREATE button 81 and the OPTIONS button 82 may be formed as push buttons.

A light emitting section 86 is provided to the lower edge of the touch pad 79. The light emitting section 86 may include LEDs (Light Emitting Diodes). The light emitting section 86 includes a plurality of lamps (five lamps in the example depicted in FIG. 2), and displays information regarding a controller number for identifying the controller or information regarding the state of the controller 6 by the lighting mode of the plurality of lamps (i.e., a combination of ON states and OFF states). The light emitting section 86 is controlled in the lighting mode designated by the application being executed on the information processing apparatus 10. In addition, in a case where profile information to be applied to the operation of the controller 6 is switched, the light emitting section 86 is controlled for a short period of time in a predetermined lighting mode representing that the profile information of the controller 6 has been switched.

Light emitting sections 85 which are long lengthwise are provided to the left and right of the touch pad 79. The light emitting sections 85 have red (R), green (G), and blue (B) LEDs, and are turned on according to light color information transmitted from the information processing apparatus 10.

A right function button 88a and a left function button 88b (hereinafter, also called function buttons 88 in a case where they are referred to collectively) are buttons used for changing or expanding the functions of other buttons. In the embodiment, when operation of an operation button 76 is input while operation of a function button 88 is being input, profile information to be applied to operation of the controller 6 is switched to profile information associated with the type of the operation button 76 operated along with the function button 88. The right function button 88a and the left function button 88b may completely be the same in terms of functions. In this case, the same functions are provided no matter which of the left and right buttons is operated.

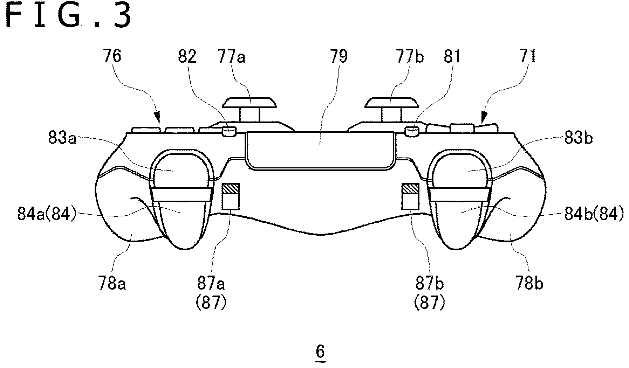

FIG. 3 depicts the rear side of the controller 6. The touch pad 79 extends and is bent from the top side of the housing of the controller 6 to the top side of the rear side of the housing. On the rear side of the housing, an R1 button 83a, an R2 button 84a, an L1 button 83b, an L2 button 84b, a right trigger stopper 87a, and a left trigger stopper 87b are provided at positions that are left-right symmetrical in the longer-side direction. The R1 button 83a and the R2 button 84a are operated by the index finger and middle finger of the right hand of the user, respectively, and the L1 button 83b and the L2 button 84b are operated by the index finger and middle finger of the left hand of the user, respectively.

The R1 button 83a and the L1 button 83b on the top side are configured as push buttons, and the R2 button 84a and the L2 button 84b on the bottom side are configured as rotatably-supported trigger buttons. Similarly to the right analog stick 77a and the left analog stick 77b, the R2 button 84a and the L2 button 84b are capable of analog output, and output values according to the amounts of rotation. In a case where the R2 button 84a and the L2 button 84b are referred to collectively, they are called trigger buttons 84.

The right trigger stopper 87a is a member for adjusting or restricting the rotation range of the R2 button 84a. The left trigger stopper 87b is a member for adjusting or restricting the rotation range of the L2 button 84b. In a case where the right trigger stopper 87a and the left trigger stopper 87b are referred to collectively, they are called trigger stoppers 87. Each of the right trigger stopper 87a and the left trigger stopper 87b can be set to any of a first position, a second position, and a third position. The maximum rotation angles are 26 degrees when the right trigger stopper 87a and the left trigger stopper 87b are at the first positions, the maximum rotation angles are 14 degrees when the right trigger stopper 87a and the left trigger stopper 87b are at the second positions, and the maximum rotation angles are 10 degrees when the right trigger stopper 87a and the left trigger stopper 87b are at the third positions.

As depicted in FIG. 2 and FIG. 3, the controller 6 has various input sections (various types of buttons and sticks, etc.). The user inputs operation to input sections of the controller 6 while looking at a menu screen or a game screen displayed on the display apparatus 4.

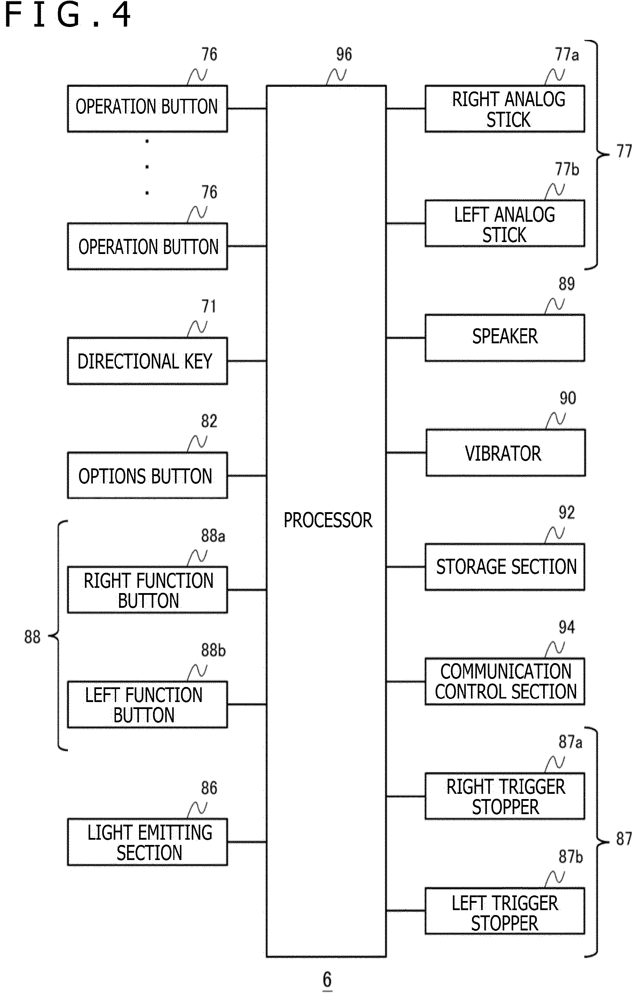

FIG. 4 depicts the hardware configuration of the controller 6 related to the present embodiment. In addition to the hardware depicted in FIG. 2 and FIG. 3, the controller 6 includes a vibrator 90, a storage section 92, a communication control section 94, and a processor 96. The processor 96 executes various types of data processing, and also controls operations performed by various types of hardware. The processor 96 may include a CPU (Central Processing Unit), a memory, and an SoC (System on a chip).

The vibrator 90 provides tactile stimuli to the user by vibrating according to a control signal from the processor 96. The vibrator 90 may include a voice coil motor (VCM). The vibrator 90 and the light emitting section 86 operate as notifying apparatuses that notify the user of various types of information. The vibrator 90 gives notification by tactile information, and the light emitting section 86 gives notification by visual information.

The storage section 92 stores data to be referred to or updated by the processor 96. The communication control section 94 controls communication with an external apparatus. Whereas the communication control section 94 wirelessly communicates with the information processing apparatus 10 in the embodiment, as a modification example, the communication control section 94 may communicate with the information processing apparatus 10 through a wire.

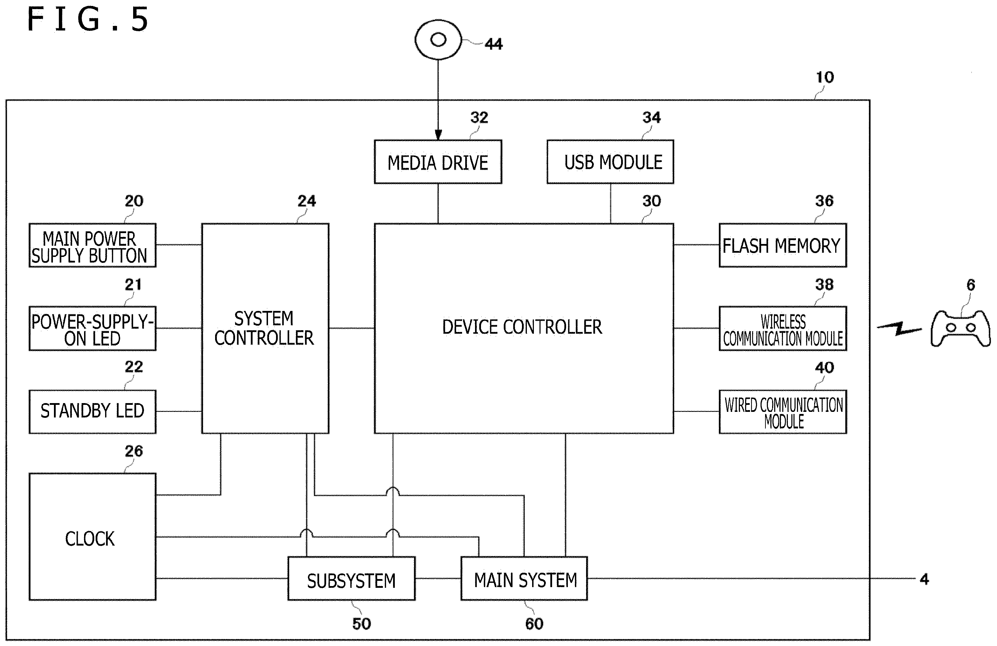

FIG. 5 depicts the hardware configuration of the information processing apparatus 10 related to the present embodiment. The information processing apparatus 10 includes a main power supply button 20, a power-supply-ON LED 21, a standby LED 22, a system controller 24, a clock 26, a device controller 30, a media drive 32, a USB (Universal Serial Bus) module 34, a flash memory 36, a wireless communication module 38, a wired communication module 40, a subsystem 50, and a main system 60.

The main system 60 includes a main CPU, a memory and a memory controller which are a main storage apparatus, a GPU (Graphics Processing Unit), and the like. The GPU is mainly used for computation processes of a game program. These functions may be formed on one chip by being configured as an SoC (System on a chip). The main CPU has functions to activate the OS, and, in an environment provided by the OS, execute applications installed on a storage section (e.g., the flash memory 36 or an undepicted auxiliary storage apparatus). In addition, the main system 60 has a function to control display content of the display apparatus 4.

The subsystem 50 includes a sub CPU, a memory and a memory controller which are a main storage apparatus, and the like, but not a GPU. The number of circuit gates of the sub CPU is smaller than the number of circuit gates of the main CPU, and the operation electric power consumption of the sub CPU is smaller than the operation electric power consumption of the main CPU. The sub CPU operates while the main CPU is in the standby state, and processing functions of the sub CPU are restricted in order to keep the power consumption low. Note that the sub CPU and the memory may be formed on separate chips.

The main power supply button 20 is an input section on which operation input from the user is performed, is provided to the front surface of the housing of the information processing apparatus 10, and is operated to turn on or off the power supply to the main system 60 of the information processing apparatus 10. Hereinbelow, the main power supply being in the ON state means that the main system 60 is in the active state, and the main power supply being in the OFF state means that the main system 60 is in the standby state. The power-supply-ON LED 21 is turned on when the main power supply button 20 is turned on, and the standby LED 22 is turned on when the main power supply button 20 is turned off.

The system controller 24 senses pressing of the main power supply button 20 by the user. In a case where the main power supply button 20 is pressed when the main power supply is in the OFF state, the system controller 24 acquires the pressing operation as an "ON instruction," and, in a case where the main power supply button 20 is pressed when the main power supply is in the ON state, the system controller 24 acquires the pressing operation as an "OFF instruction." The system controller 24 may acquire power-supply ON/OFF instructions similar to the instructions described above from operation input from the controller 6.

The main CPU has a function to execute game programs installed on a predetermined storage section or a ROM medium 44; on the other hand, the sub CPU does not have such a function. However, the sub CPU has a function to access the storage section and a function to transmit and receive data to and from an external apparatus. The sub CPU has only such restricted processing functions, and accordingly can operate with small power consumption as compared with the main CPU. These functions of the sub CPU are executed when the main CPU is in the standby state.

The clock 26 is a real time clock, generates current date/time information, and supplies the current date/time information to the system controller 24, the subsystem 50, and the main system 60.

The device controller 30 is configured as an LSI (Large-Scale Integrated Circuit) that executes information exchange between devices like a southbridge. As depicted in the figure, the device controller 30 is connected with such devices as the system controller 24, the media drive 32, the USB module 34, the flash memory 36, the wireless communication module 38, the wired communication module 40, the subsystem 50, and the main system 60. The device controller 30 absorbs differences in electrical characteristics among the respective devices and differences in data transfer speeds among the respective devices, and controls data transfer timings.

The media drive 32 is a drive to which the ROM (Read Only Memory) medium 44 on which application software such as games and license information are recorded is attached, and which drives the ROM medium 44, and reads out programs, data, and the like from the ROM medium 44. The ROM medium 44 is a read-only recording medium such as an optical disc, a magneto-optical disk, a Blu-ray disc, or the like.

The USB module 34 is a module that is connected with external equipment through a USB cable. The flash memory 36 is an auxiliary storage apparatus included in an internal storage. The wireless communication module 38 wirelessly communicates with, for example, the controller 6 by a Bluetooth (trademark or registered trademark) protocol or a communication protocol such as the IEEE (Institute of Electrical and Electronics Engineers) 802.11 protocol. The wired communication module 40 communicates with external equipment through a wire, and connects to the Internet, a server, or the like via an undepicted access point, for example.

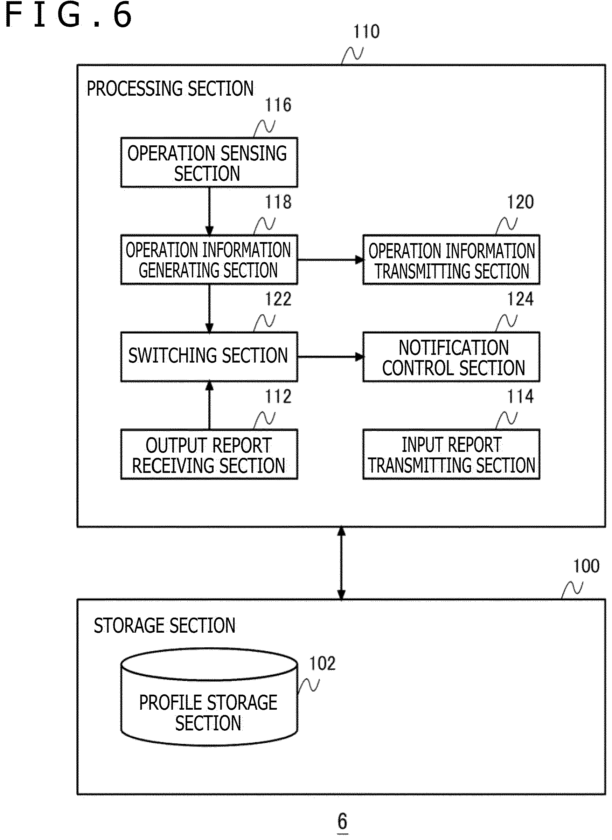

FIG. 6 is a block diagram depicting functional blocks of the controller 6. Each block depicted in a block diagram in the present specification can be realized hardware-wise by an element, an electronic circuit, or a mechanical apparatus such as a processor, a CPU, or a memory of a computer, and can be realized software-wise by a computer program or the like loaded onto a memory. Here, functional blocks realized by cooperation between these are drawn. Accordingly, those skilled in the art understand that these functional blocks can be realized in various forms by combinations of hardware and software.

The controller 6 includes a storage section 100 and a processing section 110. The storage section 100 corresponds to the storage section 92 in FIG. 4, and stores data to be referred to or updated by the processing section 110. The storage section 100 includes a profile storage section 102.

The profile storage section 102 includes a non-volatile memory that stores a plurality of pieces of profile information. The profile storage section 102 stores respective pieces of the plurality of pieces of profile information in association with mutually different slots and operation buttons 76. In the embodiment, the profile storage section 102 stores up to four pieces of profile information in association with four slots (a slot 1 to a slot 4) and the four operation buttons 76 (the circle button 72, the cross button 73, the square button 74, and the triangle button 75).

In the embodiment, at the time of factory shipment of the controller 6, a default profile is stored on the profile storage section 102 in association with the slot 1 (e.g., the triangle button 75). The default profile is profile information in which key assignment, sensitivity, dead zones, and the like are set to default values. The default profile can be neither edited nor deleted by the user. On the slots 2 to 4, new profile information customized by the user can be stored, or existing profile information can be edited and deleted.

The processing section 110 includes an output report receiving section 112, an input report transmitting section 114, an operation sensing section 116, an operation information generating section 118, an operation information transmitting section 120, a switching section 122, and a notification control section 124. A computer program (e.g., firmware) that implements at least some of a plurality of these functions may be stored on the storage section 92 of the controller 6. The processor 96 of the controller 6 may realize at least some of the plurality of these functions by reading out the computer program onto a main memory and executing the computer program thereon.

The output report receiving section 112 receives output reports which are control data transmitted at predetermined intervals from the information processing apparatus 10 to the controller 6. The input report transmitting section 114 transmits an input report which is notification data transmitted from the controller 6 to the information processing apparatus 10, according to reception of an output report.

The operation sensing section 116 senses user operation input to the controller 6. For example, the user operation includes operation to press a button, operation to tilt an analog stick 77, and operation to rotate a trigger button 84. The operation sensing section 116 senses an analog value that accompanies operation of analog input devices (the analog sticks 77 and the trigger buttons 84 in the embodiment), performs analog-to-digital conversion on the analog value, and passes a digital value obtained after the conversion to the operation information generating section 118.

According to an instruction from the user or the information processing apparatus 10, the operation information generating section 118 identifies any one of a plurality of pieces of profile information stored on the profile storage section 102 as profile information that should be applied to operation input to the controller 6 (hereinafter, also called an "applied profile"). According to the applied profile and user operation input to the controller 6 and sensed by the operation sensing section 116, the operation information generating section 118 generates user operation information to be transmitted from the controller 6 to the information processing apparatus 10. The operation information generating section 118 generates the operation information including a value obtained by adjusting a value related to the user operation input to an analog input device according to the applied profile.

For example, in a case where operation with a first tilt amount is input to an analog stick 77, the operation information generating section 118 may determine a second tilt amount of the analog stick 77 that should be input to the information processing apparatus 10, according to sensitivity and the size of the dead zone represented by the applied profile. Further, the operation information generating section 118 may generate operation information representing the second tilt amount of the analog stick 77.

The operation information transmitting section 120 transmits the user operation information generated by the operation information generating section 118 to the information processing apparatus 10. Note that the operation information transmitting section 120 may transmit the operation information to the information processing apparatus 10 with use of an input report transmitted from the controller 6 to the information processing apparatus 10.

In a case where a predetermined switching instruction is input, the switching section 122 switches profile information to be applied at the controller 6. Operation modes of the switching section 122 include a host master mode as the first mode and a device master mode as the second mode. The host master mode is an operation mode in which the applied profile is switched in accordance with control of the information processing apparatus 10. The device master mode is an operation mode in which the applied profile is switched in response to predetermined input by the user. The device master mode can also be said to be an operation mode in which, independently of whether or not there is an instruction from the information processing apparatus 10, the switching section 122 switches the applied profile upon sensing predetermined input by the user.

The default operation mode of the switching section 122 is the device master mode. Under the condition that the switching section 122 accepts, from the information processing apparatus 10, control data with contents instructing switching to the host master mode, the switching section 122 switches the operation mode from the device master mode to the host master mode. The switching section 122 stores, on the profile storage section 102, information regarding a slot to which the current applied profile corresponds.

The notification control section 124 inputs actuation signals to the notifying apparatuses according to an instruction from the information processing apparatus 10, and actuates the notifying apparatuses. For example, the instruction from the information processing apparatus 10 may be an instruction from an application being executed on the information processing apparatus 10. In addition, in a case where the applied profile is switched at the controller 6, the notification control section 124 inputs actuation signals to the notifying apparatuses, and actuates the notifying apparatuses in a predetermined mode representing switching of the applied profile. As mentioned already, the notifying apparatuses include the light emitting section 86 and the vibrator 90. The notification control section 124 controls notification to the user by performing control to turn on and turn off the light emitting section 86 and controlling vibration of the vibrator 90.

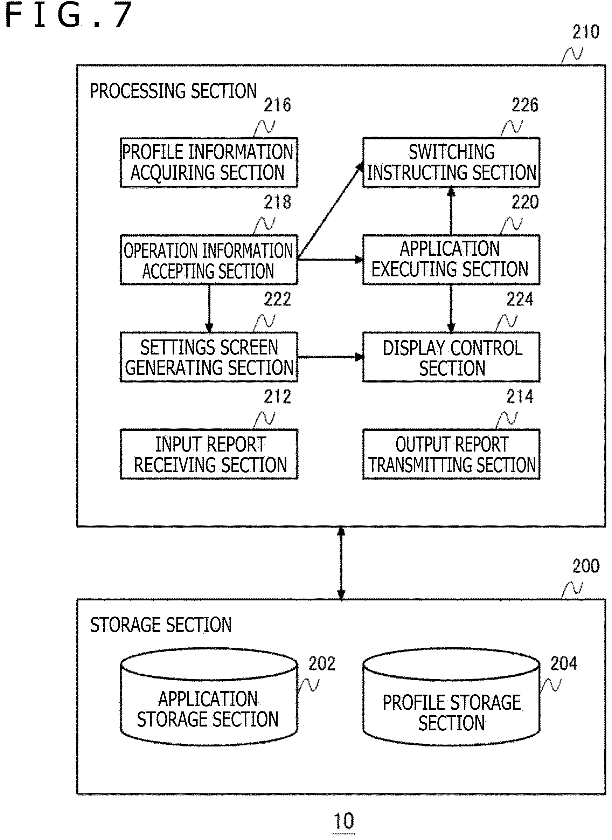

FIG. 7 is a block diagram depicting functional blocks of the information processing apparatus 10. The information processing apparatus 10 includes a storage section 200 and a processing section 210. The processing section 210 executes various types of information processing. The processing section 210 is realized by a processor of the information processing apparatus 10, and, for example, may be realized by the main system 60 depicted in FIG. 5. The storage section 200 stores data to be referred to or updated by the processing section 210. The storage section 200 can include the flash memory 36 or the ROM medium 44 depicted in FIG. 5.

The storage section 200 includes an application storage section 202 and a profile storage section 204. The application storage section 202 stores data of applications (e.g., game programs) that can be executed on the information processing apparatus 10.

The profile storage section 204 stores profile information of the controller 6 notified from the controller 6. Similarly to the profile storage section 102 of the controller 6, the profile storage section 204 stores up to four pieces of profile information in association with four slots and the four operation buttons 76 (the circle button 72, the cross button 73, the square button 74, and the triangle button 75). In addition, the profile storage section 204 stores information regarding the current applied profile of the controller 6 notified from the controller 6. Specifically, the profile storage section 204 stores information as to which profile corresponding to any slot of the slots 1 to 4 is the applied profile.

The processing section 210 includes an input report receiving section 212, an output report transmitting section 214, a profile information acquiring section 216, an operation information accepting section 218, an application executing section 220, a settings screen generating section 222, a display control section 224, and a switching instructing section 226. A computer program that implements at least some of a plurality of these functions may be stored on the storage section 200 of the information processing apparatus 10. A processor (e.g., the main system 60) of the information processing apparatus 10 may realize at least some of the plurality of these functions by reading out the computer program onto a main memory and executing the computer program thereon.

The output report transmitting section 214 transmits output reports which are control data transmitted at predetermined intervals from the information processing apparatus 10 to the controller 6. The input report receiving section 212 receives an input report which is notification data transmitted to the information processing apparatus 10 in response to reception of an output report from the controller 6.

From the controller 6 connected to the information processing apparatus 10, the profile information acquiring section 216 acquires information regarding a plurality of profiles that are stored on the controller 6 and from which the user can select a profile. In addition, the profile information acquiring section 216 acquires, from the controller 6, information regarding the current applied profile of the controller 6. The profile information acquiring section 216 stores these pieces of information on the profile storage section 204.

The operation information accepting section 218 accepts information that is transmitted from the controller 6 connected to the information processing apparatus 10 and is related to user operation of the controller 6.

The application executing section 220 executes an application (e.g., a game program or system software) stored on the application storage section 202. For example, the application executing section 220 continues a game in accordance with information regarding user operation on the controller 6, and serially generates images (hereinafter, also called a "game screen") representing results of the continuation of the game.

The settings screen generating section 222 generates data regarding a settings screen for analog input devices of the controller 6 in reference to information regarding user operation on the controller 6 during execution of an application (e.g., while a game screen is being displayed).

The display control section 224 controls the displaying of information and images on the display apparatus 4. For example, the display control section 224 causes the display apparatus 4 to display a game screen generated by the application executing section 220, by outputting data of the game screen to the display apparatus 4. In addition, the display control section 224 causes the display apparatus 4 to display a settings screen generated by the settings screen generating section 222, by outputting data of the settings screen to the display apparatus 4.

In a case where predetermined user operation is input, or in response to an instruction from an application being executed, the switching instructing section 226 instructs the controller 6 to switch the applied profile.

Operations performed by the thus-configured information processing system 1 are explained.

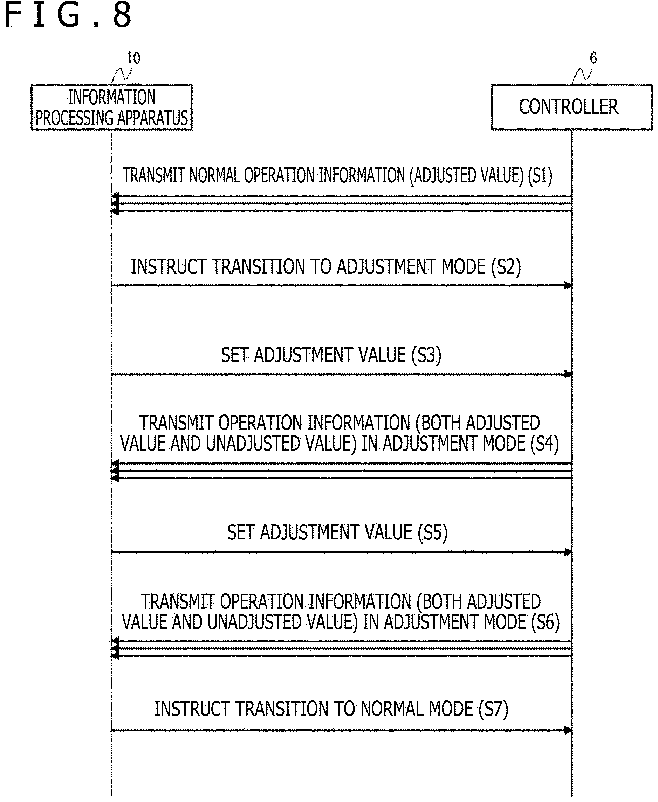

First, an operation related to the first feature of the information processing system 1 is explained. FIG. 8 depicts an example of interactions between the information processing apparatus 10 and the controller 6.

(S1 in FIG. 8) The operation sensing section 116 of the controller 6 senses user operation input to an analog input device. In the normal mode, the operation information generating section 118 of the controller 6 adjusts, according to the applied profile, a value (hereinafter also called an "amount of operation") related to the user operation input to the analog input device, and generates operation information including the adjusted value. For example, the adjusted value may be a value representing the tilt amount of the right analog stick 77a reflecting the applied profile, or may be a value representing the rotation amount of the R2 button 84a reflecting the applied profile. The operation information transmitting section 120 of the controller 6 transmits the operation information including the value adjusted according to the applied profile to the information processing apparatus 10.

(S2 in FIG. 8) The output report transmitting section 214 of the information processing apparatus 10 repeatedly transmits output reports to the controller 6 regularly. In a case where user operation instructing transition to an adjustment mode of the analog input device of the controller 6 is input via the controller 6, the output report transmitting section 214 transmits, to the controller 6, an output report including the instruction for transition to the adjustment mode.

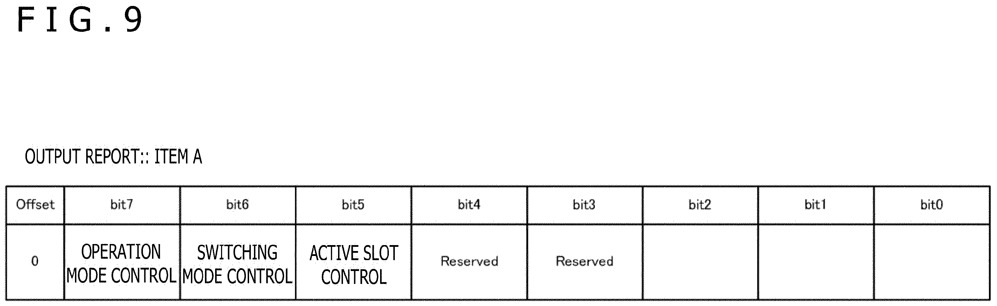

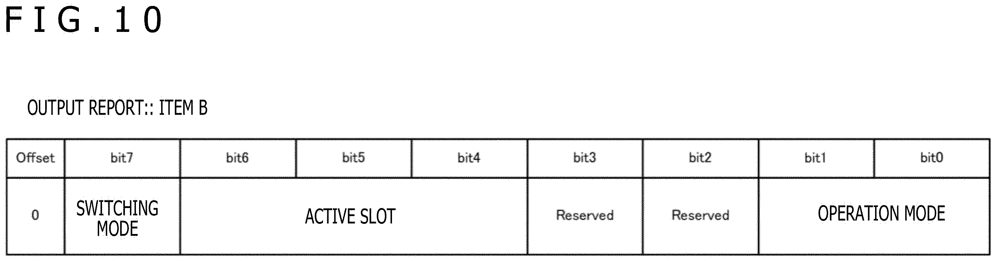

FIG. 9 and FIG. 10 depict configuration examples of output reports. FIG. 9 depicts the configuration of an item A in an output report, and FIG. 10 depicts the configuration of an item B in the output report. In the item A, flag data enabling or disabling the setting values of other items in the output report is set. In the item B, data designating an operation mode and an applied profile of the controller is set. In a case where 1 is designated as the operation mode control bit of the item A in FIG. 9, the operation mode bit string of item B in FIG. 10 is enabled. In the operation mode bit string, any value of a normal mode, a left analog stick adjustment mode, a right analog stick adjustment mode, and a trigger button adjustment mode can be designated. The output report transmitting section 214 sets the value of the operation mode bit string according to user operation in a setting mode. The controller 6 (operation information generating section 118) transitions to an adjustment mode according to the value of the operation mode bit string in a received output report.

In addition, in a case where user operation instructing transition to adjustment modes of analog input devices of the controller 6 is input, the settings screen generating section 222 of the information processing apparatus 10 generates settings screens for allowing the user to input setting values related to the analog input devices. The display control section 224 of the information processing apparatus 10 causes the display apparatus 4 to display the settings screens of the analog input devices. The settings screens of the analog input devices include settings screens of the analog sticks 77 and settings screens of the trigger buttons 84.

First, adjustment of an analog stick 77 of the controller 6 is explained. In the case of transition to an adjustment mode of an analog stick 77, the settings screen generating section 222 of the information processing apparatus 10 generates an analog stick settings screen.

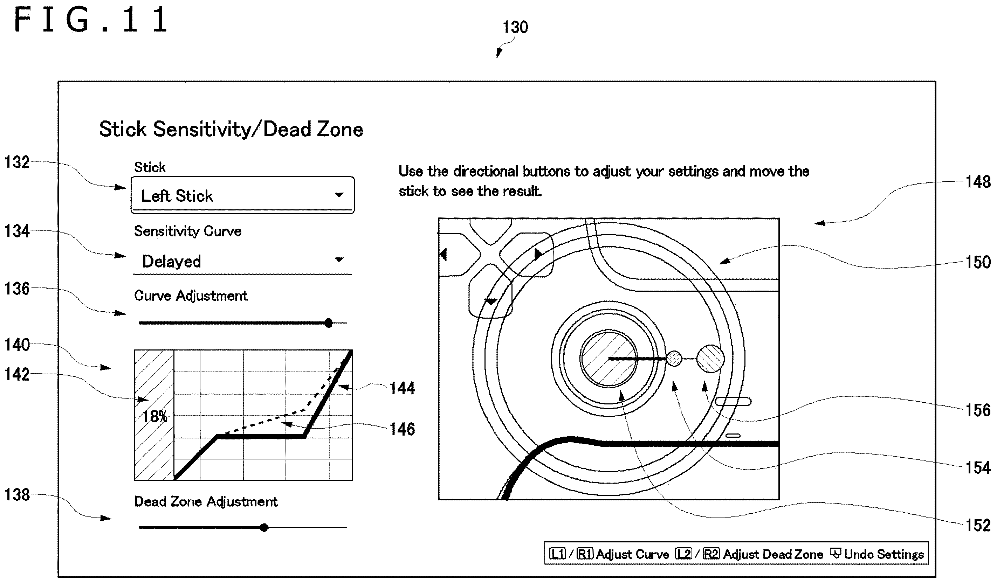

FIG. 11 depicts an example of an analog stick settings screen 130. The analog stick settings screen 130 in FIG. 11 represents content for setting the sensitivity and dead zone of the analog stick 77 of the controller 6. The analog stick settings screen 130 includes a setting-target selection field 132, a sensitivity pattern selection field 134, a sensitivity curve adjustment gauge 136, a dead zone adjustment gauge 138, a sensitivity curve image 140, and a settings state image 148.

The setting-target selection field 132 is a screen element for selecting the type of the analog stick 77 (the right analog stick 77a or the left analog stick 77b in the embodiment) which is treated as a setting target on the analog stick settings screen 130. The left analog stick 77b is selected in FIG. 11.

The sensitivity pattern selection field 134 is a screen element for selecting a particular pattern from a predetermined plurality of sensitivity curve patterns. Sensitivity curves are curves (including straight lines) representing relations between the inclination angle and output value of the analog stick 77. Specifically, the sensitivity curves are curves associating the degree (hereinafter, also called a "user input amount of operation") of operation input to the analog stick 77 by the user and the degree (hereinafter, also called a "system-recognized amount of operation") of operation recognized in data processing at the information processing apparatus 10. The user input amount of operation can also be said to be the actual tilt amount or inclination angle of the analog stick 77. In addition, the system-recognized amount of operation can also be said to be the tilt amount or inclination angle of the analog stick 77 input to data processing (the application executing section 220 in the embodiment) at the information processing apparatus 10.

The plurality of sensitivity curve patterns may include Linear, Delayed, and Quick. Linear is a pattern in which the system-recognized amount of operation increases in proportion to an increase in the user input amount of operation, and, for example, is a default pattern with a constant inclination of a sensitivity curve. Delayed is a pattern with a gentle increase amount of the system-recognized amount of operation while the user input amount of operation is small, and, the more the user input amount of operation increases, the more significantly the system-recognized amount of operation increases also. Quick is a pattern with an increase amount of the system-recognized amount of operation which is large even when the user input amount of operation is small, and the system-recognized amount of operation reaches its upper limit promptly.

The sensitivity curve adjustment gauge 136 is a screen element for adjusting the correspondence between the user input amount of operation and the system-recognized amount of operation of the analog stick 77, and specifically is a screen element for adjusting the inclination or curvature of the sensitivity curve. The sensitivity curve adjustment gauge 136 includes a slider suggesting the value of the sensitivity of the analog stick 77. The dead zone adjustment gauge 138 is a screen element for adjusting the range of the dead zone of the analog stick 77 (i.e., the size of the dead zone). The dead zone adjustment gauge 138 includes a slider suggesting the dead zone value of the analog stick 77.

The analog stick settings screen 130 includes two images representing both the sensitivity and dead zone of the analog stick 77 with a common scale (i.e., a common standard). One image is the sensitivity curve image 140 representing the sensitivity and dead zone of the analog stick 77 along an axis representing the degree of operation input to the analog stick 77 by the user. Another image is the settings state image 148 representing the sensitivity and dead zone of the analog stick 77 by distances from the center based on the degree of operation input to the analog stick 77 by the user. The settings screen generating section 222 arranges the sensitivity curve image 140 and the settings state image 148 on the analog stick settings screen 130.

The sensitivity curve image 140 includes objects (an initial sensitivity curve 146 and an adjustment sensitivity curve 144) representing sensitivity curves arranged in a graph area having a horizontal axis representing the degree of operation input to the analog stick 77 by the user and a vertical axis representing the degree of operation recognized by the information processing apparatus 10. The initial sensitivity curve 146 represents the initial value of a sensitivity curve specified by a pattern selected in the sensitivity pattern selection field 134. The adjustment sensitivity curve 144 represents a sensitivity curve obtained after adjustment with the sensitivity curve adjustment gauge 136. In addition, the sensitivity curve image 140 includes an object (dead zone 142) representing the range of the dead zone arranged along the horizontal axis of the graph area. The dead zone 142 in FIG. 6 represents that 18% of the tilt amount that the user can input from the rest position (i.e., the initial position) of the analog stick 77 is the dead zone.

The settings state image 148 includes an image representing the setting-target input section (the left analog stick 77b in FIG. 11), and information regarding the sensitivity and dead zone is superimposed on the image. Specifically, the settings state image 148 includes a plurality of concentric circles (level lines 150) having their center at the rest position (i.e., the initial position) of the analog stick 77 and representing a plurality of levels of the degree of operation from the rest position. The plurality of level lines 150 may include three level lines 150 representing 100%, 75%, and 50% of the maximum value of the degree of operation. The level lines 150 can also be said to be contour lines of the degree of operation.

A dead zone 152 which is a first object representing an insensitive zone is arranged on the settings state image 148. The dead zone 152 represents the range of the dead zone by distances from the rest position of the analog stick 77, that is, from the center of circles represented by the level lines 150. An adjusted amount-of-operation indicator 154 and an unadjusted amount-of-operation indicator 156 are further arranged on the settings state image 148. Both the adjusted amount-of-operation indicator 154 and the unadjusted amount-of-operation indicator 156 represent degrees of operation of the analog stick 77 by distances from the center described above. In addition, both the adjusted amount-of-operation indicator 154 and the unadjusted amount-of-operation indicator 156 represent tilting directions of the analog stick 77 by the directions of lines extending from the center described above.

The adjusted amount-of-operation indicator 154 represents a value obtained by adjusting a value related to user operation input to the analog stick 77 with use of profile information being adjusted in an adjustment mode (e.g., the left analog stick adjustment mode). That is, the adjusted amount-of-operation indicator 154 represents an amount of operation of the analog stick 77 recognized by the information processing apparatus 10 in a case where the profile information being adjusted is applied to the controller 6. For example, the profile information being adjusted includes setting values of the sensitivity specified by the sensitivity curve adjusted with the sensitivity curve adjustment gauge 136 and the dead zone adjustment gauge 138.

The unadjusted amount-of-operation indicator 156 represents a value in a case where the profile information being adjusted in the adjustment mode is not applied to the value related to the user operation input to the analog stick 77. Specifically, the unadjusted amount-of-operation indicator 156 represents a value derived using the amount of user operation input to the analog stick 77 and a linear sensitivity curve independently of the profile information being adjusted in the adjustment mode. The value represented by the unadjusted amount-of-operation indicator 156 is the default value of the amount of operation of the analog stick 77 recognized by the information processing apparatus 10 in reference to the amount of user operation input to the analog stick 77. Note that, although the term "unadjusted" is used, the adjustment of analog sticks 77 is completed at the time of manufacture or at the time of shipment of the controller 6 at the factory.

The settings state image 148 is an image representing the sensitivity of the analog stick 77 based on the sensitivity curve set by the user on the analog stick settings screen 130. Specifically, the settings state image 148 is an image representing the relation between a value which is represented by the adjusted amount-of-operation indicator 154 and adjusted using the profile information being adjusted and a value which is represented by the unadjusted amount-of-operation indicator 156 and to which the profile information being adjusted is not applied.

On the analog stick settings screen 130, the user selects a desired pattern from the predetermined plurality of sensitivity curve patterns in the sensitivity pattern selection field 134. It is assumed here that the delayed pattern is selected. The settings screen generating section 222 arranges, on the sensitivity curve image 140, the initial sensitivity curve 146 specified in the delayed pattern. In addition, the settings screen generating section 222 arranges, on the sensitivity curve image 140, the adjustment sensitivity curve 144 reflecting setting values of the sensitivity curve adjustment gauge 136 and the dead zone adjustment gauge 138.

(S3 in FIG. 8) The output report transmitting section 214 of the information processing apparatus 10 transmits, to the controller 6, an output report including information regarding vertices of a line graph (the adjustment sensitivity curve 144 in FIG. 11) representing sensitivity characteristics of the analog stick 77 designated on the analog stick settings screen 130.

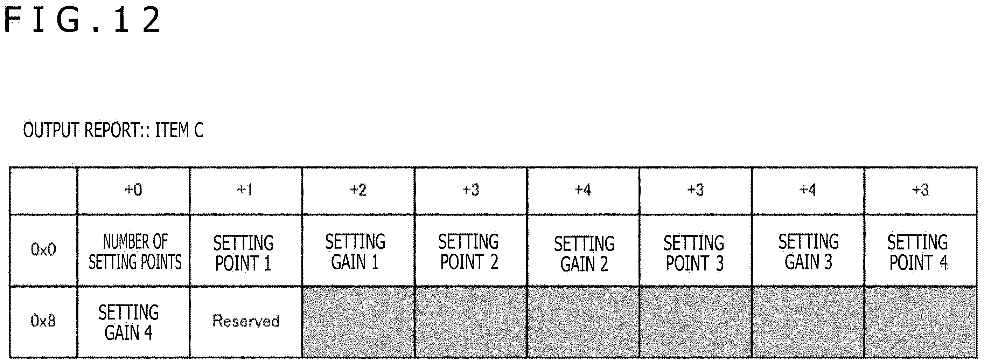

FIG. 12 depicts a configuration example of the output report. FIG. 12 depicts the configuration of an item C in the output report at the time of the left analog stick adjustment mode or the right analog stick adjustment mode. In the item C, setting values input to a settings screen (e.g., the analog stick settings screen 130 or a trigger settings screen 300 mentioned later) are set. Each cell in FIG. 12 includes one-byte value. In "Number of Setting Points," the number of vertices of the adjustment sensitivity curve 144 is designated. Although it is assumed in the embodiment that the maximum number of vertices that can be designated is four, the maximum number of vertices is not restricted to this, and it may be possible to designate four or more vertices.

In "Setting Point n" (n is any of the values from 1 to 4), the level of an input value from the return position of the analog stick 77 (i.e., the initial position at the time of the absence of operation) as the center is designated for a vertex n of the adjustment sensitivity curve 144. The position designated here is expressed by a circle having its center at the return position of the analog stick 77. In "Setting Point n," any of the values from 0 to 255 is designated. The value 0 represents the center, and the value 255 represents the outermost periphery.

In "Setting Gain n" (n is any of the values from 1 to 4), the level of an output value from the center described above is designated for the vertex n of the adjustment sensitivity curve 144. In "Setting Gain n," any of the values from 0 to 255 is designated. The value 0 represents the center, and the value 255 represents an output value of the outermost periphery.

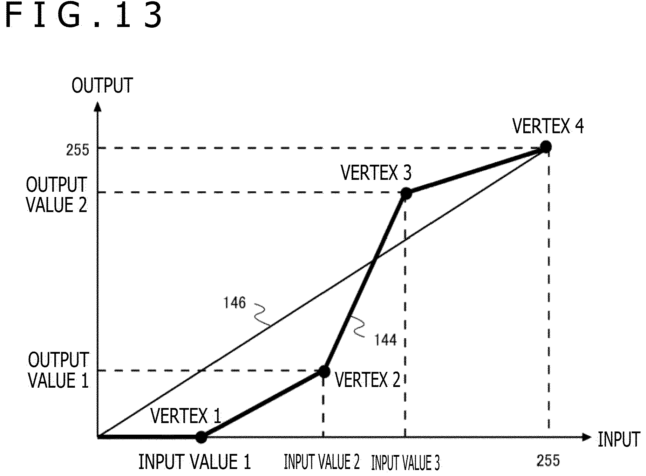

FIG. 13 depicts examples of sensitivity curves. In the example in FIG. 13, the output report transmitting section 214 of the information processing apparatus 10 sets, in the item C in the output report, information regarding a vertex 1, a vertex 2, a vertex 3, and a vertex 4 of the adjustment sensitivity curve 144.

A setting example of the item C based on the adjustment sensitivity curve 144 in FIG. 13 is depicted.
Number of setting points: 4
Setting point 1: an input value 1, setting gain 1: 0 (information regarding the vertex 1)
Setting point 2: an input value 2, setting gain 2: an output value 1 (information regarding the vertex 2)
Setting point 3: an input value 3, setting gain 3: an output value 2 (information regarding the vertex 3)
Setting point 4: 255, setting gain 4: 255 (information regarding the vertex 4)

With reference to S2 in FIG. 8 again, adjustment of the trigger buttons 84 of the controller 6 is explained. In the case of transition to an adjustment mode of the trigger buttons 84, the settings screen generating section 222 of the information processing apparatus 10 generates a trigger settings screen.

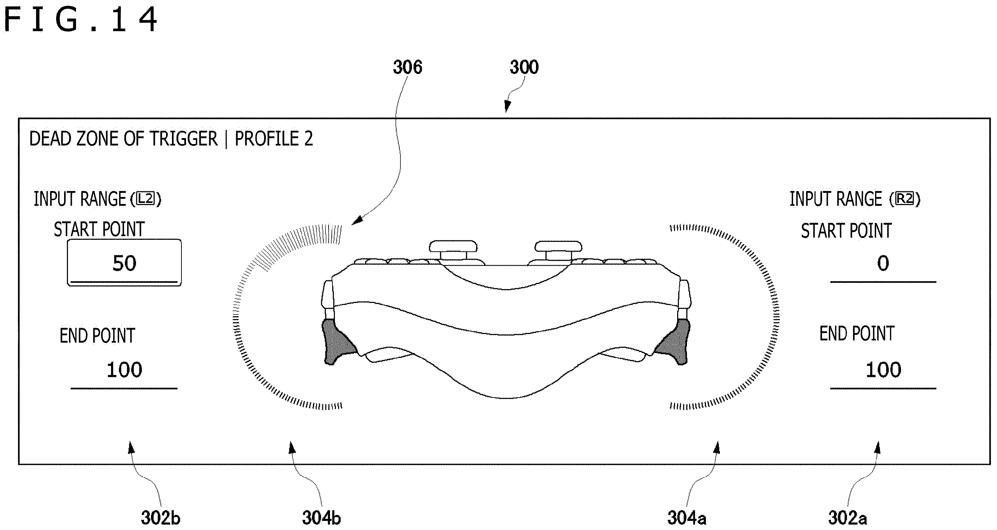

FIG. 14 depicts an example of the trigger settings screen 300. The trigger settings screen 300 in FIG. 14 includes content for setting the dead zones of the trigger buttons 84 (the R2 button 84a and the L2 button 84b) of the controller 6. The trigger settings screen 300 includes an R2 dead zone setting area 302a, an R2 behavior checking area 304a, an L2 dead zone setting area 302b, and an L2 behavior checking area 304b.

The R2 dead zone setting area 302a is an area for setting the dead zones of the R2 button 84a, and the L2 dead zone setting area 302b is an area for setting the dead zones of the L2 button 84b. In the embodiment, the start points and end points of the effective ranges are designated by percentages in the R2 dead zone setting area 302a and the L2 dead zone setting area 302b. In other words, the boundaries between the effective ranges and the dead zones on each of the start point sides and the end point sides are designated. In the example in FIG. 14, the entire inputtable range of the R2 button 84a is designated as the effective range, and 50% on the end point side of the inputtable range of the L2 button 84b is designated as the effective range.

The R2 behavior checking area 304a is an area where the level of a system input value according to rotating operation of the R2 button 84a is displayed, and an amount-of-operation indicator 306 (not depicted in FIG. 14) representing an amount of operation (system input value) of the R2 button 84a is displayed in the R2 behavior checking area 304a. The L2 behavior checking area 304b is an area where the level of a system input value according to rotating operation of the L2 button 84b is displayed, and the amount-of-operation indicator 306 representing an amount of operation (system input value) of the L2 button 84b is displayed in the L2 behavior checking area 304b. Portions corresponding to the dead zones are displayed with relatively low brightness, and portions corresponding to the effective ranges are displayed with relatively high brightness.

As S3 in FIG. 8, the user inputs a dead zone setting value of the R2 button 84a to the R2 dead zone setting area 302a, and/or inputs a dead zone setting value of the L2 button 84b to the L2 dead zone setting area 302b. The output report transmitting section 214 of the information processing apparatus 10 transmits, to the controller 6, an output report including the setting value input to the R2 dead zone setting area 302a and the setting value input to the L2 dead zone setting area 302b.

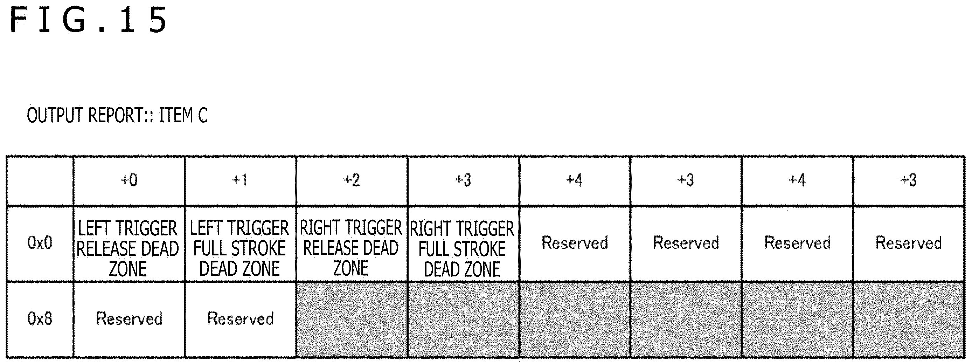

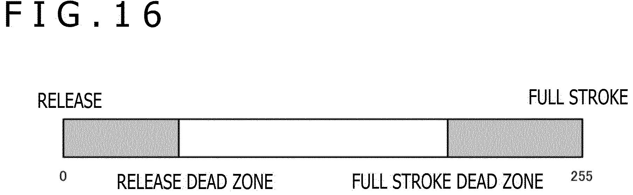

FIG. 15 depicts a configuration example of the output report. FIG. 15 depicts the configuration of the item C in the output report at the time of the trigger button adjustment mode. Each cell in FIG. 15 includes a one-byte value. FIG. 16 is a figure for explaining a dead zone setting value. In each cell in the item C, any of the values from 0 to 255 is designated. The value 0 represents a state where a trigger button 84 is released, and the value 255 represents a state where the trigger button 84 is operated at full stroke. The dead zone on the start point side is called a release dead zone, and the dead zone on the end point side is called a full stroke dead zone.

Described with reference to FIG. 15 again, the output report transmitting section 214 sets, in a left trigger release dead zone in the item C, a value obtained by converting an input value of L2 Dead Zone Setting Area 302b: Start Point on the trigger settings screen 300 into any of the values from 0 to 255. In addition, the output report transmitting section 214 sets, in a left trigger full stroke dead zone in the item C, a value obtained by converting an input value of L2 Dead Zone Setting Area 302b: End Point on the trigger settings screen 300 into any of the values from 0 to 255. In addition, the output report transmitting section 214 sets, in a right trigger release dead zone in the item C, a value obtained by converting an input value of R2 Dead Zone Setting Area 302a: Start Point on the trigger settings screen 300 into any of the values from 0 to 255. In addition, the output report transmitting section 214 sets, in a right trigger full stroke dead zone in the item C, a value obtained by converting an input value of R2 Dead Zone Setting Area 302a: End Point on the trigger settings screen 300 into any of the values from 0 to 255.

(S4 in FIG. 8) In the adjustment mode of the analog input devices, the operation information generating section 118 of the controller 6 acquires the setting values of the analog input devices set in the output report acquired by the output report receiving section 112. The operation information generating section 118 uses, for generation of operation information, the setting values of the analog input devices set in the output report as profile information being adjusted (hereinafter, also called a "profile being adjusted"). For example, the profile being adjusted includes characteristics of sensitivity curves being adjusted and the ranges of dead zones being adjusted.

The operation sensing section 116 A/D (Analog-to-Digital)-converts an output from an analog input device related to operation of the analog input device by the user at a predetermined sample rate, and acquires an output value. In the adjustment mode of the analog input devices, the operation information generating section 118 generates operation information including both an adjusted operation value and an unadjusted operation value as values related to user operation input to the analog input device regarding the output value. The adjusted operation value is a value obtained by adjusting, using the profile being adjusted, the value related to the user operation input to the analog input device. The unadjusted operation value is the value which is related to the user operation input to the analog input device and to which the profile being adjusted is not applied.

The operation information transmitting section 120 of the controller 6 transmits, to the information processing apparatus 10, operation information including both the adjusted operation value and the unadjusted operation value. Both the adjusted operation value and the unadjusted operation value are any of the values in the range of 0 to 255. Note that, in a case where the dead zone of an analog input device is set, the adjusted operation value is a system input value (any of the values from 0 to 255) in the effective range excluding the dead zone.

In the embodiment, using the default sensitivity curve representing a linear relation between amounts of operation input to the analog input device and system input values, the operation information generating section 118 derives a system input value corresponding to an amount of operation input to the analog input device, and treats the system input value as the unadjusted operation value. Accordingly, the unadjusted operation value is linearly related to the amount of operation input to the analog input device. In contrast, for example, as represented by the adjustment sensitivity curve 144 in FIG. 13, the adjusted operation value can be non-linearly related to the amount of operation input to the analog input device.

In the adjustment mode, the settings screen generating section 222 of the information processing apparatus 10 updates display contents of the settings screen of the analog input device in reference to the adjusted operation value and the unadjusted operation value represented by the operation information transmitted from the controller 6.

For example, in reference to the adjusted operation value, the settings screen generating section 222 updates the position of the adjusted amount-of-operation indicator 154 in the settings state image 148 on the analog stick settings screen 130 depicted in FIG. 11. In addition, in reference to the unadjusted operation value, the settings screen generating section 222 updates the position of the unadjusted amount-of-operation indicator 156 in the settings state image 148. In this manner, in the settings state image 148, the relation between the adjusted amount-of-operation indicator 154 (adjusted operation value) and the unadjusted amount-of-operation indicator 156 (unadjusted operation value) changes depending on setting of the sensitivity curve of the analog stick 77 by the user. Thus, sensitivity characteristics of the analog stick 77 based on the current adjustment value can be presented to the user in an easy-to-understand manner.

In addition, the settings screen generating section 222 updates the amount-of-operation indicator 306 on the trigger settings screen 300 depicted in FIG. 14 depending on the unadjusted operation value and the adjusted operation value. For example, as depicted in FIG. 14, in a case where the amount of operation of the L2 button 84b is in the range of a dead zone, the settings screen generating section 222 causes the amount-of-operation indicator 306 with a length corresponding to the unadjusted operation value to be displayed, relative to the movable range of the amount-of-operation indicator 306 including both the dead zones and the effective range, which movable range is represented by the values from 0 to 255.

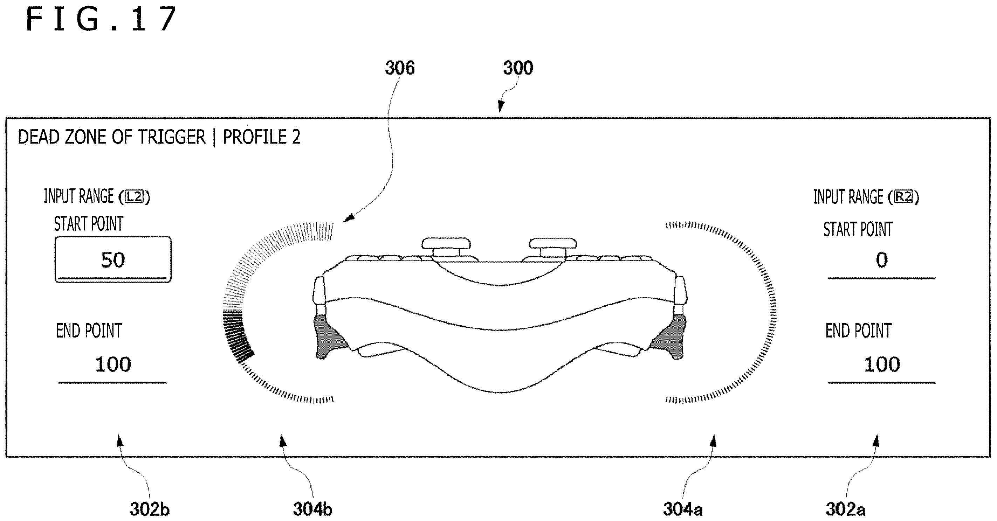

On the other hand, as depicted in the trigger settings screen 300 in FIG. 17, in a case where the amount of operation of the L2 button 84b is in the effective range (outside the ranges of the dead zones), the settings screen generating section 222 causes the amount-of-operation indicator 306 with a length corresponding to the adjusted operation value to be displayed, relative to the allowable range of the amount-of-operation indicator 306 in the effective range, which allowable range is represented by the values from 0 to 255. Thus, sensitivity characteristics of the trigger button 84 based on the current adjustment value can be presented to the user in an easy-to-understand manner.

In S4, the following processes (1) and (2) are repeated. (1) The information processing apparatus 10 transmits output reports to the controller at predetermined communication intervals. (2) According to the adjustment profile set in S3, the controller 6 generates operation information including both the adjusted operation value and the unadjusted operation value for a value related to user operation input to an analog input device such as an analog stick 77 or a trigger button 84 acquired at a predetermined sampling timing, and transmits the operation information to the information processing apparatus 10.

(S5 in FIG. 8) While checking the settings state image 148 on the analog stick settings screen 130, the user adjusts/updates the sensitivity curve (including the dead zone) of an analog stick 77. In addition, while checking the R2 behavior checking area 304a and the L2 behavior checking area 304b on the trigger settings screen 300, the user adjusts/updates the dead zones of the trigger buttons 84. The output report transmitting section 214 of the information processing apparatus 10 transmits, to the controller 6, an output report including information regarding the updated profile being adjusted.

(S6 in FIG. 8) In reference to the information regarding the updated profile being adjusted, the operation information generating section 118 of the controller 6 generates new operation information including both the adjusted operation values and the unadjusted operation values in response to user operation on the analog input devices. The operation information transmitting section 120 of the controller 6 transmits the new operation information to the information processing apparatus 10.

(S7 in FIG. 8) The user checks the settings state image 148 on the analog stick settings screen 130 or checks the R2 behavior checking area 304a and the L2 behavior checking area 304b on the trigger settings screen 300, and inputs, to the controller 6, operation instructing ending the adjustment mode. In a case where the user operation instructing ending the adjustment mode is input via the controller 6, the output report transmitting section 214 of the information processing apparatus 10 transmits, to the controller 6, an output report including an adjustment mode end instruction (i.e., an instruction to return to the normal mode). The controller 6 (operation information generating section 118) transitions to the normal mode according to the received output report.

Advantages of the first feature of the information processing system 1 according to the embodiment are described. An output value from an analog input device of the controller 6 is analog/digital-converted at the controller 6. Accordingly, the information processing apparatus 10 cannot, on its own, cause the settings screen to correctly reflect output values available before and after the change of the sensitivity curve of the analog input device. In the information processing system 1 according to the embodiment, both the adjusted operation value reflecting the profile being adjusted and the unadjusted operation value not reflecting the profile being adjusted are provided from the controller 6 to the information processing apparatus 10. Thus, the settings screen on which the correct adjusted operation value and unadjusted operation value are displayed and by which sensitivity characteristics of the analog input device can intuitively and easily be understood can be provided to the user.

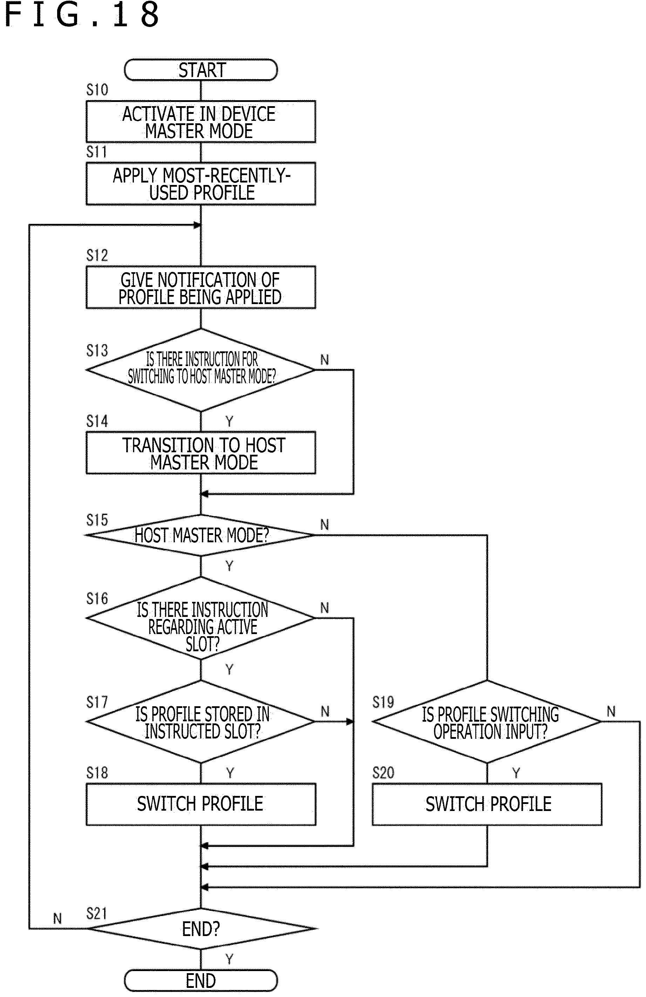

Next, an operation related to the second feature of the information processing system 1 is explained. FIG. 18 is a flowchart depicting an operation performed by the controller 6 related to the second feature.

The initial state of the controller 6 (switching section 122) is the device master mode, and the controller 6 (switching section 122) is activated in the device master mode (S10). By referring to the profile storage section 102, the switching section 122 selects, as the applied profile to be used for generation of operation information, a profile which has been used most recently, and, for example, has been used at the time point when the power supply has been turned off (S11). The switching section 122 acquires, from the profile storage section 102, information regarding a slot (hereinafter, also called an "active slot") corresponding to the applied profile.

The input report transmitting section 114 of the controller 6 transmits, to the information processing apparatus 10, an input report including information regarding the applied profile, and specifically, information regarding the active slot (S12). The profile information acquiring section 216 of the information processing apparatus 10 stores, on the profile storage section 204, information regarding the active slot of the controller 6 represented by the input report, that is, information regarding the current applied profile of the controller 6.

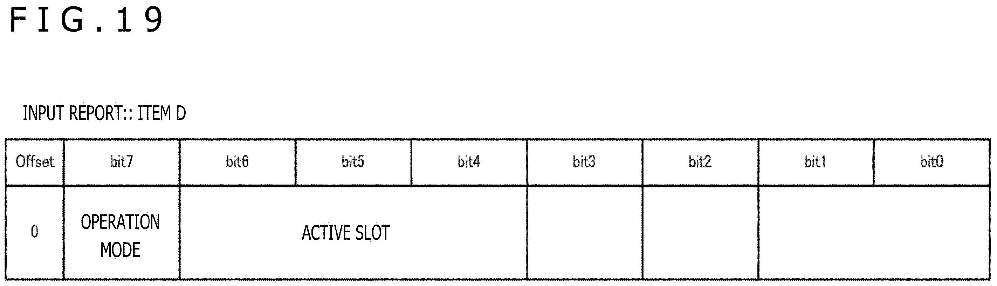

FIG. 19 depicts a configuration example of the input report. FIG. 19 depicts the configuration of an item D in the input report. In the item D in the input report, a value representing the state of the controller is set. As an operation mode bit, a value representing the current operation mode of the controller 6 is set, and, specifically, a value representing the host master mode or a value representing the device master mode is set. As an active slot bit string, a value representing the current active slot (any of the slots 1 to 4) is set.

In a case where the information processing apparatus 10 supports profile switching of the controller 6, the switching instructing section 226 of the information processing apparatus 10 causes an output report including an instruction to switch to the host master mode to be transmitted to the controller 6 when connection of the controller is sensed. Data of the output report here is explained. In a case where 1 is designated as the switching mode control bit in Output Report: Item A depicted in FIG. 9, the switching mode bit in Output Report: Item B depicted in FIG. 10 is enabled. A value representing the host master mode is designated as the switching mode bit here, but a value representing the device master mode also can be designated as the switching mode bit.

When the output report receiving section 112 of the controller 6 receives an output report including an instruction to switch to the host master mode (Y in S13), the switching section 122 of the controller 6 switches the operation mode to the host master mode (S14). In a case where an output report including an instruction to switch to the host master mode is not received (N in S13), the process in S14 is skipped, and the device master mode is continued.

In the host master mode, an instruction for switching the applied profile from the information processing apparatus 10 to the controller 6 is given in a case where predetermined profile switching operation is input, and is given according to the execution status of an application at the information processing apparatus 10. The profile switching operation is simultaneous pressing of a function button 88 and an operation button 76 of the controller 6. For example, simultaneous pressing of the left function button 88b and the square button 74 is profile switching operation of designating, as a profile to be newly applied, a profile associated with the square button 74. In addition, simultaneous pressing of the right function button 88a and the circle button 72 is profile switching operation of designating, as a profile to be newly applied, a profile associated with the circle button 72.

In a case where the operation information received from the controller 6 represents profile switching operation, the switching instructing section 226 of the information processing apparatus 10 transmits, to the controller 6, an output report including an instruction to switch to the profile designated by the profile switching operation.

In addition, according to the execution status of an application at the application executing section 220, the switching instructing section 226 causes an output report including an instruction to switch the applied profile to be transmitted to the controller 6. For example, the switching instructing section 226 may cause an output report designating, as a new applied profile, a profile (e.g., a default profile) specified for an execution-target application to be transmitted to the controller 6. In addition, the switching instructing section 226 may cause an output report designating, as a new applied profile, a profile for which an instruction has been given from an application being executed to be transmitted to the controller 6.

In an output report here, 1 is designated as the switching mode control bit in Output Report: Item A depicted in FIG. 9, and a value representing the host master mode is designated as the switching mode bit in Output Report: Item B depicted in FIG. 10. Further, identification information regarding a slot (active slot) corresponding to a profile to be newly applied is designated as the active slot bit string in Item B. Note that, in a case where 0 is designated as the switching mode bit, that is, in a case where a value representing the device master mode is designated as the switching mode bit, the value of the active slot bit string is ignored.

In a case where the switching instructing section 226 transmits, to the controller 6, an output report including an instruction to switch the applied profile, the switching instructing section 226 stores information representing a profile to be newly applied on the profile storage section 204, and, for example, stores information regarding an active slot on the profile storage section 204.

In a case where the profile switching mode is the host master mode (Y in S15) and an output report designating a new active slot is received (Y at S16), by referring to the profile storage section 102, the switching section 122 of the controller 6 checks whether a profile corresponding to the new active slot designated in the output report is stored. In a case where the profile corresponding to the new active slot designated in the output report is stored (Y in S17), the switching section 122 switches the applied profile to the profile corresponding to the new active slot (S18). In other words, in a case where the information designating the particular profile included in the output report corresponds to any of a plurality of pieces of profile information stored on the profile storage section 102, the switching section 122 switches the applied profile to the particular profile described above.

In a case where the profile corresponding to the new active slot designated in the output report is not stored on the profile storage section 102 (N in S17), the process in S18 is skipped, and the applied profile having been applied until then is kept being applied. In addition, in a case where an output report designating a new active slot is not received (N in S16), the processes in S17 and S18 are skipped, and the applied profile having been applied until then is kept being applied.

In a case where the profile switching mode is the device master mode (N in S15), profile switching is executed autonomously at the controller 6, that is, executed only by processes inside the controller 6. Specifically, when the operation sensing section 116 senses input of profile switching operation (Y in S19), the switching section 122 switches the applied profile to a profile designated by the profile switching operation, in a case where the profile corresponding to an operation button 76 (slot) designated by the profile switching operation is stored (S20). In a case where input of profile switching operation is not sensed (N in S19), the process in S20 is skipped, and the applied profile having been applied until then is kept being applied.

When a predetermined end condition such as a condition that the power supply of the controller 6 is turned off or the like is satisfied (Y in S21), the process depicted in FIG. 18 is ended. When the end condition is not satisfied (N in S21), the process returns to S12. During operation, the controller 6 regularly transmits, to the information processing apparatus 10, input reports including information regarding the current applied profile.

In reference to an input report transmitted from the controller 6, the profile information acquiring section 216 of the information processing apparatus 10 identifies the current applied profile of the controller 6. In a case where the applied profile of the controller 6 stored on the profile storage section 204 and the applied profile for which notification has been given by the input report do not match, the profile information acquiring section 216 causes the display apparatus 4 to display predetermined information via the display control section 224. This information may include contents representing an error or an alert. In addition, this information may include contents prompting the user to take a predetermined measure such as re-activation or initialization of the controller 6 or the information processing apparatus 10.

According to the second feature of the information processing system 1 of the embodiment, since the controller 6 can operate in the first mode, it is possible to reduce instances where a profile (e.g., key assignment) different from a profile expected by an application being executed on the information processing apparatus 10 is applied to the controller 6. In addition, since the controller 6 can operate in the second mode, even in a case where the controller 6 is connected with an apparatus not supporting profile control, the user can select a desired profile.

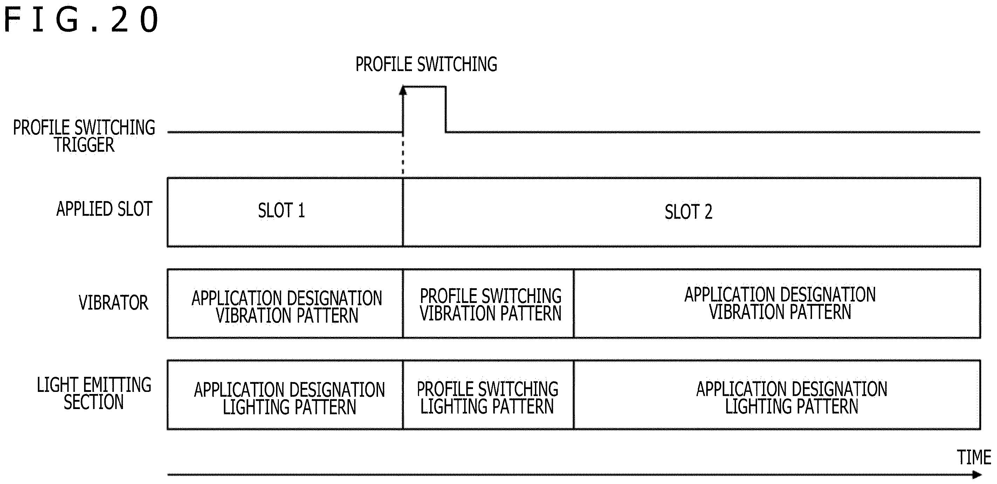

Next, the third feature of the information processing system 1 is explained. FIG. 20 depicts a mode of notification of profile switching to which the third feature is not applied. FIG. 20 depicts a situation where the applied profile is switched from a profile of the slot 1 to a profile of the slot 2. Depending on the execution status of an application, the application executing section 220 of the information processing apparatus 10 causes an output report including data instructing notification to the user by vibration or light emission to be transmitted to the controller 6. The notification control section 124 of the controller 6 actuates the vibrator 90 in accordance with a vibration pattern transmitted from the information processing apparatus 10 and designated by the application, and actuates the light emitting section 86 in accordance with a lighting pattern transmitted from the information processing apparatus 10 and designated by the application.

In addition, in a case where the applied profile is switched by the switching section 122, the notification control section 124 controls the vibrator 90 and the light emitting section 86 to notify the user of the profile switching. A profile switching vibration pattern is a predetermined vibration pattern for giving notification of profile switching, and includes a vibration mode and vibration time. Similarly, a profile switching lighting pattern is a predetermined lighting pattern (which can also be said to be a light emission pattern) for giving notification on profile switching, and includes a lighting mode and lighting time. Note that notification may be given using the light emitting section 85.

As depicted in FIG. 20, if profile switching is performed in a state where the vibrator 90 is being actuated as designated by the application, the duration of the profile switching vibration pattern between the application-designated vibration patterns becomes shorter, and it becomes difficult for the user to make distinctions between application-designated vibration and profile switching vibration. Similarly, if profile switching is performed in a state where the light emitting section 86 is actuated as designated by the application, the duration of the profile switching lighting pattern between the application-designated lighting patterns becomes shorter, and it becomes difficult for the user to make distinctions between application-designated lighting and profile switching lighting.

In view of this, the controller 6 according to the embodiment provides predetermined segmentation periods at least before a period in which notification on profile switching is given by vibration. The segmentation periods are periods in which a stimulus pattern or information provided to a sensory system of the user such as the tactile system or the visual system is different from that provided from an application (i.e., periods in which the stimulus pattern or information changes from a pattern provided by the application). The segmentation periods in the embodiment include a mute period in which the vibrator 90 is not caused to vibrate and a mute period in which the light emitting section 86 is not caused to emit light. In the embodiment, further, a mute period in which the vibrator 90 is not caused to vibrate is provided after a period in which notification on profile switching is given by vibration. Similarly, a mute period in which the light emitting section 86 is not caused to emit light is provided before and/or after a period in which notification of profile switching is given by light emission.

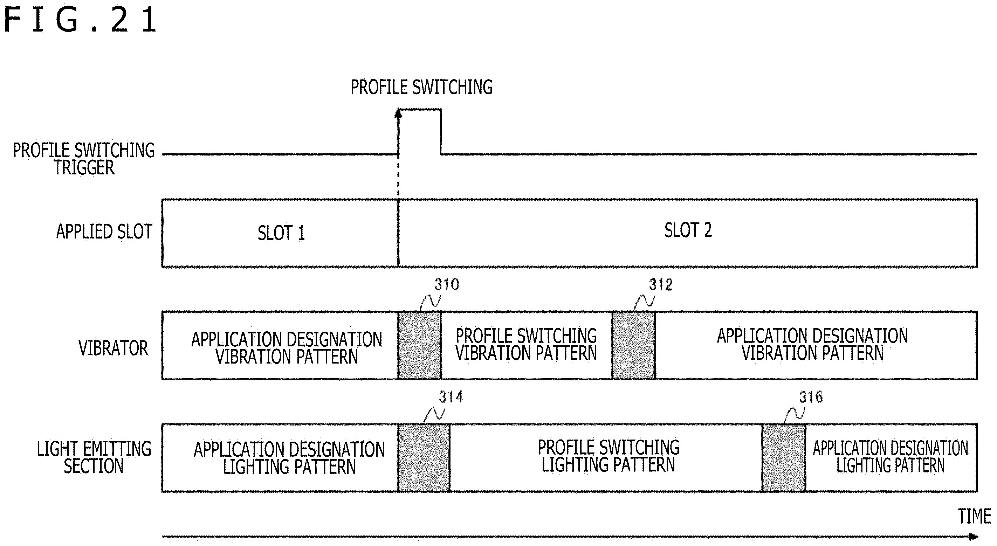

FIG. 21 depicts a mode of notification of profile switching to which the third feature is applied. The mute periods described above include a first vibration mute period 310, a second vibration mute period 312, a first light emission mute period 314, and a second light emission mute period 316. In the embodiment, the lengths of the first vibration mute period 310, the second vibration mute period 312, and the second light emission mute period 316 are 70 milliseconds, and the length of the first light emission mute period 314 is 71 milliseconds. The length of each mute period is not limited to this. Different lengths of the mute periods may be set for vibration and for light emission, and different lengths of the mute periods may be set for those before notification periods and for those after notification periods.

In a case where the applied profile of the controller 6 is switched by the switching section 122, the notification control section 124 senses the switching. In a case where switching of the applied profile of the controller 6 is sensed, the notification control section 124 actuates the vibrator 90 in a profile switching vibration pattern after the first vibration mute period 310 has elapsed. Along with this, in a case where the applied profile of the controller 6 is switched, the notification control section 124 actuates the light emitting section 86 in a profile switching lighting pattern after the first light emission mute period 314 has elapsed.

In a case where switching of the applied profile of the controller 6 is sensed, the notification control section 124 stops actuation of the vibrator 90 instructed by the information processing apparatus 10. For example, in a case where switching of the applied profile of the controller 6 is sensed and the vibrator 90 is being actuated as instructed by the information processing apparatus 10, the notification control section 124 stops the actuation of the vibrator 90 instructed by the information processing apparatus 10, and starts the first vibration mute period 310. Note that, in the following explanation, an instruction from the information processing apparatus 10 can also be said to be an instruction from an application being executed on the information processing apparatus 10.

Note that, in a case where the applied profile of the controller 6 is switched, the notification control section 124 may gradually lower the level of actuation of the vibrator 90 instructed by the information processing apparatus 10 before the start of the first vibration mute period 310, and then stop the actuation of the vibrator 90 (what is generally called fade-out).

The notification control section 124 restricts actuation of the vibrator 90 in the first vibration mute period 310. In the embodiment, in the first vibration mute period 310, the notification control section 124 does not actuate the vibrator 90 even in a case where an instruction for actuation of the vibrator 90 is accepted from the information processing apparatus 10. As a modification example, in the first vibration mute period 310, the notification control section 124 may actuate the vibrator 90 in a predetermined pattern representing that the current period is a mute period, no matter whether an instruction for actuation of the vibrator 90 is accepted or not from the information processing apparatus 10.

In a case where switching of the applied profile of the controller 6 is sensed, the notification control section 124 stops actuation of the light emitting section 86 according to an instruction from the information processing apparatus 10. For example, in a case where switching of the applied profile of the controller 6 is sensed and the light emitting section 86 is being actuated as instructed by the information processing apparatus 10, the notification control section 124 stops the actuation of the light emitting section 86 instructed by the information processing apparatus 10, and starts the first light emission mute period 314.

The notification control section 124 restricts actuation of the light emitting section 86 in the first light emission mute period 314. In the embodiment, in the first light emission mute period 314, the notification control section 124 does not actuate the light emitting section 86, and keeps the light emitting section 86 turned off even in a case where an instruction for actuation of the light emitting section 86 is accepted from the information processing apparatus 10. As a modification example, in the first light emission mute period 314, the notification control section 124 may actuate the light emitting section 86 in a predetermined pattern representing that the current period is a mute period, no matter whether an instruction for actuation of the vibrator 90 is accepted or not from the information processing apparatus 10.

After giving notification of profile switching by actuating the vibrator 90 in accordance with a profile switching vibration pattern, the notification control section 124 restricts actuation of the vibrator 90 in the second vibration mute period 312. In the embodiment, the notification control section 124 does not actuate the vibrator 90 in the second vibration mute period 312. As a modification example, in the second vibration mute period 312, the notification control section 124 may actuate the vibrator 90 in a predetermined pattern representing that the current period is a mute period, no matter whether an instruction for actuation of the vibrator 90 is accepted or not from the information processing apparatus 10.

After the second vibration mute period 312 has elapsed, the notification control section 124 returns to a state where the vibrator 90 is actuated according to an instruction from the information processing apparatus 10. Note that, after the end of the second vibration mute period 312, the notification control section 124 may gradually increase the level of actuation of the vibrator 90 instructed by the information processing apparatus 10 to the normal level (what is generally called fade-in).

After giving notification of profile switching by actuating the light emitting section 86 in accordance with a profile switching lighting pattern, the notification control section 124 restricts actuation of the light emitting section 86 in the second light emission mute period 316. In the embodiment, in the second light emission mute period 316, the notification control section 124 does not actuate the light emitting section 86 even in a case where an instruction for actuation of the light emitting section 86 is accepted from the information processing apparatus 10. As a modification example, in the second light emission mute period 316, the notification control section 124 may actuate the light emitting section 86 in a predetermined pattern representing that the current period is a mute period, no matter whether an instruction for actuation of the vibrator 90 is accepted or not from the information processing apparatus 10. After the second light emission mute period 316 has elapsed, the notification control section 124 returns to a state where the light emitting section 86 is actuated according to an instruction from the information processing apparatus 10.

After the first vibration mute period 310 has elapsed, the notification control section 124 actuates the vibrator 90 for the time specified by a profile switching vibration pattern. In addition, after the first light emission mute period 314 has elapsed, the notification control section 124 actuates the light emitting section 86 for the time specified by a profile switching light emission pattern. In the embodiment, the time specified by the profile switching vibration pattern is 140 milliseconds, while the time specified by the profile switching lighting pattern is 500 milliseconds. That is, along with profile switching, the notification control section 124 actuates the light emitting section 86 for a time longer than the actuation time of the vibrator 90. Continuing notification by light emission longer than notification by vibration makes it possible to make the user recognize the profile switching more surely. Note that the actuation time of the vibrator 90 and the light emitting section 86 in profile switching notification is not limited to what is described above.

The notification control section 124 inputs an actuation instruction signal to the vibrator 90 after the first vibration mute period 310 has elapsed, and inputs an actuation instruction signal to the light emitting section 86 after the first light emission mute period 314 has elapsed. As mentioned already, the first light emission mute period 314 (71 milliseconds) is longer than the first vibration mute period 310 (70 milliseconds). That is, the notification control section 124 inputs an actuation instruction signal to the vibrator 90 after the first vibration mute period 310 has elapsed, and, after the predetermined waiting time has elapsed after the input, inputs an actuation instruction signal to the light emitting section 86.

The waiting time can also be said to be the difference between the first vibration mute period 310 and the first light emission mute period 314. The waiting time is specified in reference to a delay that is measured in advance that occurs between input of an actuation instruction signal to the vibrator 90 and the start of actuation of the vibrator 90 (e.g., a drive delay of a VCM). The waiting time in the embodiment is 1 millisecond. Note that the waiting time may be specified in reference to the difference determined by an experiment or the like between the time that is required for humans to sense vibration and the time required for the humans to sense light.

The third feature of the information processing system 1 according to the embodiment can assist in enabling easy distinctions between notification from an application being executed on the information processing apparatus 10 to the user and notification to the user related to switching of the profile applied at the controller 6 via notifying apparatuses (the vibrator 90 and the light emitting section 86 in the embodiment) of the controller 6.

The present invention has been explained thus far with reference to an embodiment. It is understood by those skilled in the art that the embodiment is illustrated as an example, various modification examples are possible for combinations of respective constituent elements or respective processing processes, and such modification examples are also within the scope of the present invention.

A modification example is explained. The information processing apparatus 10 may further include a notification control section. The notification control section of the information processing apparatus 10 may cause the display apparatus 4 to display contents related to profile switching via the display control section 224 in a case where the switching instructing section 226 has switched the profile applied to the controller 6. The contents related to profile switching may include the name of a profile to be newly applied, or key assignment information.

Another modification example is explained. In a case where the applied profile of the controller 6 is switched according to the execution status of an application, the switching instructing section 226 of the information processing apparatus 10 may store, on the profile storage section 204, information (a slot number, etc.) of the profile that had been applied before the switching. In a case where execution of an application which has caused the switching of the applied profile of the controller 6, for example, execution of an application (a system settings screen requesting the default profile, etc.) requesting a particular profile, has ended, the switching instructing section 226 may switch the applied profile of the controller 6 back to the profile that is stored on the profile storage section 204 and had been applied before the switching.

Still another modification example is explained. Whereas vibration and light emission are used as means for giving notification of profile switching in the embodiment described above, sound may be used, as a modification example. In a case where the applied profile is switched by the switching section 122, the notification control section 124 of the controller 6 may notify the user of the profile switching by controlling the speaker 89 in accordance with a predetermined profile switching sound pattern to cause the speaker 89 to output a predetermined sound representing profile switching. Further, the notification control section 124 may provide mute periods in which sound is not output from the speaker 89 before and after periods in which notification of the profile switching is given by sound.

Any combinations of the embodiment and modification examples mentioned above also are useful as embodiments of the present invention. The new embodiments generated by the combinations combine respective advantages of the combined embodiment and modification examples. In addition, it is also understood by those skilled in the art that functions that should be attained by each constituent requirement described in claims are realized singly by each constituent element or realized by cooperation between respective constituent elements depicted in the embodiment and modification examples.

The technical idea described in the embodiment and modification examples described above can be expressed as aspects described in the respective items below.

### [Item 1-1]

An operation apparatus including:
an analog input device to which user operation is input;
a storage section that stores setting information regarding the analog input device;
a generating section that generates operation information including a value obtained by adjusting, in reference to the setting information, a value related to the user operation input to the analog input device; and
a transmitting section that transmits the generated operation information to an external information processing apparatus, in which, in an adjustment mode of the analog input device, the generating section generates operation information including a first value and a second value related to the user operation input to the analog input device,
the first value is a value obtained by adjusting, using setting information being adjusted in the adjustment mode, the value related to the user operation input to the analog input device, and the second value is a value to which the setting information being adjusted has not been applied.

The operation apparatus can assist the information processing apparatus to provide an operation interface that is based on the first value to which the setting information being adjusted has been applied and the second value to which the setting information being adjusted has not been applied, that is for adjusting the analog input device, and that is easy for a user to intuitively understand.

### [Item 1-2]

The operation apparatus according to item 1-1, in which the second value is linearly related to an amount of operation input to the analog input device, and the first value is non-linearly related to the amount of operation input to the analog input device.

The operation apparatus can assist the information processing apparatus to provide an adjustment operation interface that is easy for the user to intuitively understand, by providing, to the information processing apparatus, the first value which can deviate from how the user senses, and, along with the first value, the second value which corresponds to how the user senses.

### [Item 1-3]

The operation apparatus according to item 1-1 or 1-2, in which the setting information is information regarding sensitivity.

The operation apparatus can assist adjustment of the sensitivity of the analog input device.

### [Item 1-4]

The operation apparatus according to item 1-3, in which the information regarding sensitivity includes a value for converting an amount of operation input to the analog input device.

The operation apparatus can assist adjustment of a value for converting the amount of operation input to the analog input device as the sensitivity of the analog input device.

### [Item 1-5]

The operation apparatus according to item 1-3 or 1-4, in which the information regarding sensitivity includes a dead zone setting value of the analog input device.

The operation apparatus can assist adjustment of the dead zone of the analog input device as the sensitivity of the analog input device.

### [Item 1-6]

The operation apparatus according to any one of items 1-1 through 1-5, in which the analog input device is an analog stick.

The operation apparatus can assist adjustment of the analog stick.

### [Item 1-7]

The operation apparatus according to any one of items 1-1 through 1-5, in which the analog input device is a trigger button.

The operation apparatus can assist adjustment of the trigger button.

### [Item 1-8]

An operation apparatus including:
an analog input device to which user operation is input;
a storage section that stores setting information regarding the analog input device; and
a processor, in which
the processor generates operation information including a value obtained by adjusting, in reference to sensitivity represented by the setting information, a value related to the user operation input to the analog input device,
the processor transmits the generated operation information to an external information processing apparatus,
in an adjustment mode of the analog input device, the processor generates operation information including a first value and a second value related to the user operation input to the analog input device, the first value is a value obtained by adjusting, using setting information being adjusted in the adjustment mode, the value related to the user operation input to the analog input device, and
the second value is a value to which the setting information being adjusted has not been applied.

The operation apparatus can assist the information processing apparatus to provide an operation interface that is based on the first value to which the setting information being adjusted has been applied and the second value to which the setting information being adjusted has not been applied, that is for adjusting the analog input device, and that is easy for a user to intuitively understand.

### [Item 1-9]

An information processing system including:
an information processing apparatus; and
an operation apparatus, in which
the operation apparatus includes
an analog input device to which user operation is input,
a storage section that stores setting information regarding the analog input device,
a generating section that generates operation information including a value obtained by adjusting, in reference to the setting information, a value related to the user operation input to the analog input device, and
a transmitting section that transmits the generated operation information to the information processing apparatus,
in an adjustment mode of the analog input device, the generating section generates operation information including a first value and a second value related to the user operation input to the analog input device,
the first value is a value obtained by adjusting, using setting information being adjusted in the adjustment mode, the value related to the user operation input to the analog input device,
the second value is a value to which the setting information being adjusted has not been applied, and
the information processing apparatus arranges, on a settings screen of the analog input device, an image representing a relation between the first value and the second value included in the operation information.

In the information processing system, the information processing apparatus can provide a settings screen that is based on the first value to which the setting information being adjusted has been applied and the second value to which the setting information being adjusted has not been applied, that is for adjusting the analog input device, and that is easy for a user to intuitively understand.

### [Item 1-10]

The information processing system according to item 1-9, in which the image representing the relation between the first value and the second value is an image representing sensitivity of the analog input device. The information processing system can present the sensitivity of the analog input device of the operation apparatus in a mode which is easy to understand intuitively.

### [Item 1-11]

The information processing system according to item 1-9 or 1-10, in which
the information processing apparatus repeatedly transmits control data to the operation apparatus, and,
in a case where adjustment of the analog input device is selected by a user, the information processing apparatus transmits, to the operation apparatus, control data including an instruction for transition to the adjustment mode.

The information processing system can cause the operation apparatus to transition to the adjustment mode in response to the user operation.

### [Item 1-12]

The information processing system according to any one of items 1-9 through 1-11, in which the information processing apparatus transmits, to the operation apparatus, control data including information regarding vertices of a line graph representing sensitivity characteristics of the analog input device designated on the settings screen.

The information processing system can efficiently transmit, to the operation apparatus, the sensitivity characteristics of the analog input device designated on the settings screen.

### [Item 1-13]

The information processing system according to any one of items 1-9 through 1-12, in which the information processing apparatus transmits, to the operation apparatus, control data including information regarding a dead zone of the analog input device designated on the settings screen.

The information processing system can transmit, to the operation apparatus, the information regarding the dead zone of the analog input device designated on the settings screen.

### [Item 1-14]

An information processing method executed by an operation apparatus including an analog input device to which user operation is input and a storage section that stores setting information regarding the analog input device, the information processing method including:
a step of generating operation information including a value obtained by adjusting, in reference to the setting information, a value related to the user operation input to the analog input device; and
a step of transmitting the generated operation information from the operation apparatus to an external information processing apparatus, in which,
in the step of generating, in an adjustment mode of the analog input device, operation information including a first value and a second value related to the user operation input to the analog input device is generated,
the first value is a value obtained by adjusting, using setting information being adjusted in the adjustment mode, the value related to the user operation input to the analog input device, and the second value is a value to which the setting information being adjusted has not been applied.

The information processing method can assist the information processing apparatus to provide an operation interface that is based on the first value to which the setting information being adjusted has been applied and the second value to which the setting information being adjusted has not been applied, that is for adjusting the analog input device, and that is easy for a user to intuitively understand.

### [Item 1-15]

A computer program that causes an operation apparatus including an analog input device to which user operation is input and a storage section that stores setting information regarding the analog input device to realize:
a function of generating operation information including a value obtained by adjusting, in reference to the setting information, a value related to the user operation input to the analog input device; and
a function of transmitting the generated operation information from the operation apparatus to an external information processing apparatus, in which,
by the function of generating, in an adjustment mode of the analog input device, operation information including a first value and a second value related to the user operation input to the analog input device is generated,
the first value is a value obtained by adjusting, using setting information being adjusted in the adjustment mode, the value related to the user operation input to the analog input device, and the second value is a value to which the setting information being adjusted has not been applied.

The computer program can realize an operation apparatus that assists the information processing apparatus to provide an operation interface that is based on the first value to which the setting information being adjusted has been applied and the second value to which the setting information being adjusted has not been applied, that is for adjusting the analog input device, and that is easy for a user to intuitively understand.

### [Item 2-1]

An operation apparatus to which user operation is input, the operation apparatus including:
a storage section that stores a plurality of pieces of setting information regarding behavior of the operation apparatus;
a transmitting section that transmits, to an external information processing apparatus, operation information representing the input user operation, the operation information being operation information to which any piece of setting information of the plurality of pieces of setting information has been applied; and
a switching section that switches setting information to be applied at the operation apparatus, in which
operation modes of the switching section include a first mode in which the setting information to be applied at the operation apparatus is switched in accordance with control by the information processing apparatus and a second mode in which the setting information to be applied at the operation apparatus is switched in response to predetermined input by a user.

Since the first mode is provided, the operation apparatus can reduce instances where setting information different from setting information expected by an application being executed on the information processing apparatus is applied to the operation apparatus. In addition, since the second mode is provided, even in a case where the controller 6 is connected with an apparatus not supporting profile control, the user can select a desired profile.

### [Item 2-2]

The operation apparatus according to item 2-1, in which the switching section operates in the first mode in a case where control data with predetermined contents is accepted from the information processing apparatus, and operates in the second mode in a case where the control data with predetermined contents is not accepted.

The operation apparatus can realize operation in the first mode in a case where the information processing apparatus supports setting information switch control and operation in the second mode in a case where the information processing apparatus does not support setting information switch control.

### [Item 2-3]

The operation apparatus according to item 2-2, in which the switching section accepts control data including information designating particular setting information stored on the storage section.

The operation apparatus can switch setting information to be applied to the operation apparatus, in response to designation from the information processing apparatus.

### [Item 2-4]

The operation apparatus according to item 2-2 or 2-3, in which the switching section switches setting information to be applied to the operation information, in a case where information designating setting information accepted during operation in the first mode corresponds to any of the plurality of pieces of setting information stored on the storage section.

The operation apparatus can prevent unauthorized operations of the operation apparatus by switching the setting information in a case where designation from the information processing apparatus is correct.

### [Item 2-5]

The operation apparatus according to any one of items 2-1 through 2-4, further including:
a notifying section that notifies the information processing apparatus of an operation mode of the switching section and setting information being applied.

The operation apparatus can cause the operation mode of the switching section and the setting information being applied to be recognized and managed on the side of the information processing apparatus.

### [Item 2-6]

The operation apparatus according to any one of items 2-1 through 2-5, in which the switching section operates in the second mode at time of activation of the operation apparatus.

Using the second mode as a default operation mode, the operation apparatus can realize switching to the first mode in response to an instruction from the information processing apparatus.

### [Item 2-7]

The operation apparatus according to any one of items 2-1 through 2-6, in which, at time of activation of the operation apparatus, the switching section applies, to the operation information, setting information that has most recently been applied.

The operation apparatus can apply suitable setting information at the time of activation.

### [Item 2-8]

An operation apparatus to which user operation is input, the operation apparatus including:
a storage section that stores a plurality of pieces of setting information regarding behavior of the operation apparatus; and
a processor, in which
the processor transmits, to an external information processing apparatus, operation information representing the input user operation, the operation information being operation information to which any piece of setting information of the plurality of pieces of setting information has been applied,
the processor switches setting information to be applied at the operation apparatus, and
operation modes of the processor related to switching of the setting information include a first mode in which the setting information to be applied at the operation apparatus is switched in accordance with control by the information processing apparatus and a second mode in which the setting information to be applied at the operation apparatus is switched in response to predetermined input by a user.

Since the first mode is provided, the operation apparatus can reduce instances where setting information different from setting information expected by an application being executed on the information processing apparatus is applied to the operation apparatus. In addition, since the second mode is provided, even in a case where the controller 6 is connected with an apparatus not supporting profile control, the user can select a desired profile.

### [Item 2-9]

An information processing system including:
an operation apparatus to which user operation is input; and
an information processing apparatus that executes an application, in which
the operation apparatus stores a plurality of pieces of setting information regarding behavior of the operation apparatus,
according to an execution status of the application, the information processing apparatus transmits, to the operation apparatus, control data instructing switching of setting information to be applied to the operation apparatus, and,
in reference to control data transmitted from the information processing apparatus, the operation apparatus switches setting information to be applied.

Since the first mode is provided for the operation apparatus, the information processing system can reduce instances where setting information different from setting information expected by an application being executed on the information processing apparatus is applied to the operation apparatus. In addition, since the second mode is provided for the operation apparatus, even in a case where the operation apparatus is connected with an apparatus not supporting profile control, the user can select a desired profile.

### [Item 2-10]

The information processing system according to item 2-9, in which the control data includes data designating setting information to be newly applied.

In this information processing system, the information processing apparatus can control the setting information to be newly applied in the operation apparatus.

### [Item 2-11]

The information processing system according to item 2-10, in which, in a case where a particular application is executed, the information processing apparatus transmits, to the operation apparatus, control data designating, as the setting information to be newly applied, setting information specified for the particular application.

In the information processing system, setting information expected by an application being executed on the information processing apparatus can be applied to the operation apparatus.

### [Item 2-12]

The information processing system according to any one of items 2-9 through 2-11, in which
the information processing apparatus stores setting information being applied to the operation apparatus,
the operation apparatus notifies the information processing apparatus of setting information being applied, and,
in a case where the setting information being applied to the operation apparatus and being stored on the information processing apparatus and the setting information that is being applied and for which notification has been given from the operation apparatus do not match, the information processing apparatus causes a screen to display predetermined information.

In a case where there is inconsistency in the setting information being applied between the operation apparatus and the information processing apparatus, the information processing system can present the predetermined information for alert reporting, error display, or the like to a user.

### [Item 2-13]

An information processing method executed by an operation apparatus to which user operation is input and which includes a storage section that stores a plurality of pieces of setting information regarding behavior of the operation apparatus, the information processing method including:
a step of transmitting, to an external information processing apparatus, operation information representing the input user operation, the operation information being operation information to which any piece of setting information of the plurality of pieces of setting information has been applied; and
a step of switching setting information to be applied at the operation apparatus, in which
operation modes of the step of switching include a first mode in which the setting information to be applied at the operation apparatus is switched in accordance with control by the information processing apparatus and a second mode in which the setting information to be applied at the operation apparatus is switched in response to predetermined input by a user.

Since the operation apparatus can operate in the first mode, the information processing method can reduce instances where setting information different from setting information expected by an application being executed on the information processing apparatus is applied to the operation apparatus. In addition, since the operation apparatus can operate also in the second mode, even in a case where the operation apparatus is connected with an apparatus not supporting profile control, the user can select a desired profile.

### [Item 2-14]

A computer program that causes an operation apparatus to which user operation is input and which includes a storage section that stores a plurality of pieces of setting information regarding behavior of the operation apparatus to realize:
a function of transmitting, to an external information processing apparatus, operation information representing the input user operation, the operation information being operation information to which any piece of setting information of the plurality of pieces of setting information has been applied; and
a function of switching setting information to be applied at the operation apparatus, in which
operation modes of the function of switching include a first mode in which the setting information to be applied at the operation apparatus is switched in accordance with control by the information processing apparatus and a second mode in which the setting information to be applied at the operation apparatus is switched in response to predetermined input by a user.

Since the computer program can cause the operation apparatus to operate in the first mode, the computer program can reduce instances where setting information different from setting information expected by an application being executed on the information processing apparatus is applied to the operation apparatus. In addition, since the operation apparatus can operate also in the second mode, even in a case where the operation apparatus is connected with an apparatus not supporting profile control, the user can select a desired profile.

### [Item 3-1]

An operation apparatus to which operation by a user who plays with an application is input, the operation apparatus including:
a notifying apparatus that gives notification to the user;
a notification control section that actuates the notifying apparatus;
a storage section that stores a plurality of pieces of setting information regarding behavior of the operation apparatus; and
a switching section that switches setting information to be applied to the operation apparatus in a case where a predetermined switching instruction is input, in which,
in a case where the switching of the setting information to be applied to the operation apparatus is sensed, the notification control section gives notification of the switching of the setting information by actuating the notifying apparatus in a predetermined pattern after a predetermined first segmentation period has elapsed.

The operation apparatus can assist in enabling easy distinctions between notification from an application being executed to the user and notification to the user that accompanies the switching of the setting information.

### [Item 3-2]

The operation apparatus according to item 3-1, in which, in a case where the switching of the setting information to be applied to the operation apparatus is sensed and the notifying apparatus is being actuated in accordance with an instruction from the application, the notification control section stops actuation of the notifying apparatus according to the instruction from the application, and starts the first segmentation period.

The operation apparatus can surely provide the first segmentation period by stopping actuation of the notifying apparatus even in a case where there is an instruction from the application.

### [Item 3-3]

The operation apparatus according to item 3-1 or 3-2, in which, after actuating the notifying apparatus and giving notification of the switching of the setting information, the notification control section restricts actuation of the notifying apparatus in a predetermined second segmentation period.

The operation apparatus can assist in enabling easy distinction between notification of the switching of the setting information and notification from the application to the user by surely providing the second segmentation period in which actuation of the notifying apparatus is restricted (e.g., the notifying apparatus is not actuated).

### [Item 3-4]

The operation apparatus according to item 3-3, in which, after the second segmentation period has elapsed, the notification control section causes the notifying apparatus to return to a state where the notifying apparatus is actuated, in accordance with an instruction from the application.

The operation apparatus can return to a normal state where the notifying apparatus is caused to actuate in accordance with an instruction from the application, while clearly separating the actuation from actuation of the notifying apparatus that accompanies the switching of the setting information.

### [Item 3-5]

The operation apparatus according to any one of items 3-1 through 3-4, in which, in the first segmentation period, the notification control section restricts actuation of the notifying apparatus even in a case where an instruction for actuation of the notifying apparatus is accepted from the application.

The operation apparatus can surely provide the first segmentation period in which actuation of the notifying apparatus is restricted (e.g., the notifying apparatus is not actuated).

### [Item 3-6]

The operation apparatus according to any one of items 3-1 through 3-5, in which
the notifying apparatus includes a vibrating apparatus and a light emitting apparatus, and,
after the first segmentation period has elapsed, the notification control section actuates the vibrating apparatus for a first time period, and actuates the light emitting apparatus for a second time period which is longer than the first time period.

The operation apparatus makes it easier for the user to more surely recognize the switching of the setting information.

### [Item 3-7]

The operation apparatus according to any one of items 3-1 through 3-6, in which
the notifying apparatus includes a vibrating apparatus and a light emitting apparatus,
the notification control section inputs an actuation instruction signal to the vibrating apparatus after the first segmentation period has elapsed, and inputs an actuation instruction signal to the light emitting apparatus after predetermined waiting time has elapsed since the input of the actuation instruction signal to the vibrating apparatus, and
the waiting time is specified according to a delay between the input of the actuation instruction signal to the vibrating apparatus and start of actuation of the vibrating apparatus.

The operation apparatus can reduce the difference between an actuation start timing of the light emitting apparatus and an actuation start timing of the vibrating apparatus; in other words, the operation apparatus can reduce the difference between the timing at which the user recognizes light-emission of the light emitting apparatus and the timing at which the user recognizes vibration of the vibrating apparatus. This makes it unlikely that the user feels a sense of strangeness.

### [Item 3-8]

An operation apparatus to which operation by a user who plays with an application is input, the operation apparatus including:
a processor;
a notifying apparatus that is controlled by the processor and gives notification to the user; and
a storage section that stores a plurality of pieces of setting information regarding behavior of the operation apparatus, in which the processor switches setting information to be applied to the operation apparatus in a case where a predetermined switching instruction is input, and,
in a case where the switching of the setting information to be applied to the operation apparatus is sensed, the processor gives notification of the switching of the setting information by actuating the notifying apparatus in a predetermined pattern after a predetermined first segmentation period has elapsed.

The operation apparatus can assist in enabling easy distinctions between notification from an application being executed to the user and notification to the user that accompanies the switching of the setting information.

### [Item 3-9]

An information processing method executed by an operation apparatus to which operation by a user who plays with an application is input and which includes a notifying apparatus that gives notification to the user and a storage section that stores a plurality of pieces of setting information regarding behavior of the operation apparatus, the information processing method including:
a step of switching setting information to be applied to the operation apparatus, in a case where a predetermined switching instruction is input; and
a step of giving notification of, in a case where the switching of the setting information to be applied to the operation apparatus is sensed, the switching of the setting information by actuating the notifying apparatus in a predetermined pattern after a predetermined first segmentation period has elapsed.

The information processing method can assist in enabling easy distinctions between notification from an application being executed to the user and notification to the user that accompanies the switching of the setting information.

### [Item 3-10]

A computer program that causes an operation apparatus to which operation by a user who plays with an application is input and which includes a notifying apparatus that gives notification to the user and a storage section that stores a plurality of pieces of setting information regarding behavior of the operation apparatus to realize:
a notification control function of actuating the notifying apparatus; and
a function of switching setting information to be applied to the operation apparatus, in a case where a predetermined switching instruction is input, in which,
in a case where the switching of the setting information to be applied to the operation apparatus is sensed, the notification control function gives notification of the switching of the setting information by actuating the notifying apparatus in a predetermined pattern after a predetermined first segmentation period has elapsed.

The computer program can realize an operation apparatus that assists in enabling easy distinctions between notification from an application being executed to the user and notification to the user that accompanies the switching of the setting information.

### [Industrial Applicability]

The present invention can be applied to an operation apparatus, an information processing system, an information processing method, and a computer program.

### [Reference Signs List]

1: Information processing system
6: Controller
10: Information processing apparatus
77: Analog stick
84: Trigger button
118: Operation information generating section
120: Operation information transmitting section
122: Switching section
124: Notification control section
220: Application executing section
222: Settings screen generating section
224: Display control section
226: Switching instructing section

## Claims

1. An operation apparatus to which operation by a user who plays with an application is input, the operation apparatus comprising:
a notifying apparatus that gives notification to the user;
a notification control section that actuates the notifying apparatus;
a storage section that stores a plurality of pieces of setting information regarding behavior of the operation apparatus; and
a switching section that switches setting information to be applied to the operation apparatus in a case where a predetermined switching instruction is input, wherein,
in a case where the switching of the setting information to be applied to the operation apparatus is sensed, the notification control section gives notification of the switching of the setting information by actuating the notifying apparatus in a predetermined pattern after a predetermined first segmentation period has elapsed.

2. The operation apparatus according to claim 1, wherein, in a case where the switching of the setting information to be applied to the operation apparatus is sensed and the notifying apparatus is being actuated in accordance with an instruction from the application, the notification control section stops actuation of the notifying apparatus according to the instruction from the application, and starts the first segmentation period.

3. The operation apparatus according to claim 1, wherein, after actuating the notifying apparatus and giving notification of the switching of the setting information, the notification control section restricts actuation of the notifying apparatus in a predetermined second segmentation period.

4. The operation apparatus according to claim 3, wherein, after the second segmentation period has elapsed, the notification control section causes the notifying apparatus to return to a state where the notifying apparatus is actuated, in accordance with an instruction from the application.

5. The operation apparatus according to claim 1, wherein, in the first segmentation period, the notification control section restricts actuation of the notifying apparatus even in a case where an instruction for actuation of the notifying apparatus is accepted from the application.

6. The operation apparatus according to claim 1, wherein
the notifying apparatus includes a vibrating apparatus and a light emitting apparatus, and,
after the first segmentation period has elapsed, the notification control section actuates the vibrating apparatus for a first time period, and actuates the light emitting apparatus for a second time period which is longer than the first time period.

7. The operation apparatus according to claim 1, wherein
the notifying apparatus includes a vibrating apparatus and a light emitting apparatus,
the notification control section inputs an actuation instruction signal to the vibrating apparatus after the first segmentation period has elapsed, and inputs an actuation instruction signal to the light emitting apparatus after predetermined waiting time has elapsed since the input of the actuation instruction signal to the vibrating apparatus, and
the waiting time is specified according to a delay between the input of the actuation instruction signal to the vibrating apparatus and start of actuation of the vibrating apparatus.

8. An operation apparatus to which operation by a user who plays with an application is input, the operation apparatus comprising:
a processor;
a notifying apparatus that is controlled by the processor and gives notification to the user; and
a storage section that stores a plurality of pieces of setting information regarding behavior of the operation apparatus, wherein the processor switches setting information to be applied to the operation apparatus in a case where a predetermined switching instruction is input, and,
in a case where the switching of the setting information to be applied to the operation apparatus is sensed, the processor gives notification of the switching of the setting information by actuating the notifying apparatus in a predetermined pattern after a predetermined first segmentation period has elapsed.

9. An information processing method executed by an operation apparatus to which operation by a user who plays with an application is input and which includes a notifying apparatus that gives notification to the user and a storage section that stores a plurality of pieces of setting information regarding behavior of the operation apparatus, the information processing method comprising:
a step of switching setting information to be applied to the operation apparatus, in a case where a predetermined switching instruction is input; and
a step of giving notification of, in a case where the switching of the setting information to be applied to the operation apparatus is sensed, the switching of the setting information by actuating the notifying apparatus in a predetermined pattern after a predetermined first segmentation period has elapsed.

10. A computer program that causes an operation apparatus to which operation by a user who plays with an application is input and which includes a notifying apparatus that gives notification to the user and a storage section that stores a plurality of pieces of setting information regarding behavior of the operation apparatus to realize:
a notification control function of actuating the notifying apparatus; and
a function of switching setting information to be applied to the operation apparatus, in a case where a predetermined switching instruction is input, wherein,
in a case where the switching of the setting information to be applied to the operation apparatus is sensed, the notification control function gives notification of the switching of the setting information by actuating the notifying apparatus in a predetermined pattern after a predetermined first segmentation period has elapsed.
